# EUROPEAN PATENT APPLICATION

(11) **EP 4 850 839 A1**
(43) Date of publication of application: **09.12.2026**
(21) Application number: 26181988.2
(22) Date of filing: 29.05.2026
(51) Int. Cl.: B23K 9/095, B23K 9/09, B23K 9/073

(54) **SYSTEM FOR CALCULATING ARC VOLTAGE, ELECTRODE EXTENSION VOLTAGE, AND CONTACT TIP-TO-WORK VOLTAGE DURING A WELDING OPERATION**

(30) Priority: 30.05.2025 US 202563815381 P; 28.05.2026 US 202619691064
(71) Applicant: Illinois Tool Works Inc., Glenview IL 60025 (US)
(72) Inventor: WAGNER, Dustin, Glenview, 60025 (US)
(74) Representative: HGF

(57) **Abstract**

A welding system comprises: power conversion circuitry configured to output welding power during a welding operation; and control circuitry configured to: control the power conversion circuitry to output the welding power at least by outputting the welding power in an arc length-controlled mode during an arc length-controlled period of the welding operation; and determine an arc voltage of a welding arc of the weld circuit by: determining a plurality of output voltages and a plurality of output currents during one or more portions of the arc length-controlled period of the welding operation, wherein each output voltage of the plurality of output voltages is associated with a respective output current of the plurality of output currents; and calculating the arc voltage based on one or more differences between the plurality of output voltages and the plurality of output currents.

## Description

### RELATED APPLICATIONS

The present application claims the benefit of U.S. Provisional Patent Application Serial No. 63/815,381, filed May 30, 2025, entitled "SYSTEMS AND METHODS FOR CALCULATING ARC VOLTAGE, ELECTRODE EXTENSION VOLTAGE, AND CONTACT TIP-TO-WORK VOLTAGE DURING A WELDING OPERATION." The entirety of U.S. Provisional Patent Application Serial No. 63/815,381 is expressly incorporated herein by reference.

### FIELD OF THE DISCLOSURE

This disclosure relates generally to welding systems and, more particularly, to systems, methods, and control circuitry for calculating arc voltage, electrode extension voltage, and contact tip-to-work voltage during a welding operation.

### BACKGROUND

Welding components (e.g., welding torches) are sometimes powered by welding power supplies. Conventional power supplies use a range of electrical components and/or electrical circuitry to produce appropriate welding power for various welding operations and/or welding components.

Power supplies may be used to conduct a welding operation, such as an arc welding operation. For example, gas-metal arc welding ("GMAW") (also referred to as metal inert gas welding ("MIG")) is a welding process in which an electric arc forms between an electrode and pieces of metal that are to be welded. In many systems, the electrode consists of a wire that is advanced through a welding torch. The power source applies electrical current to the electrode so as to pass the electric arc between the electrode and a workpiece, thereby heating the electrode and causing the pieces of metal to melt. Upon cooling down of the melted pieces of metal, the pieces of metal join and form a weld. Electrical and/or physical parameters can be adjusted to give the best electric arc possible and improve the overall welding process.

### SUMMARY

Systems, methods, and control circuitry for systems, methods, and control circuitry for calculating arc voltage, electrode extension voltage, and contact tip-to-work voltage during a welding operation are disclosed, substantially as illustrated by and described in connection with at least one of the figures, as set forth more completely in the claims.

### BRIEF DESCRIPTION OF THE DRAWINGS

FIG. 1 illustrates an example welding system, in accordance with aspects of this disclosure;
FIG. 2A illustrates a graph (x-axis: time; y-axis: voltage) of measured voltages of a welding system during a first example of an arc length-controlled mode based on short circuit duration, in accordance with aspects of this disclosure;
FIG. 2B illustrates a graph (x-axis: time; y-axis: voltage) of measured voltages of a welding system during a second example of an arc length-controlled mode based on short circuit duration, in accordance with aspects of this disclosure;
FIGS. 3A-3D illustrate an example sequence of controlling an arc length by adjusting one or more welding parameters, in accordance with aspects of this disclosure;
FIG. 4 illustrates a graph (x-axis: output current; y-axis: output voltage) of examples of output currents and output voltages used to calculate a resistance of a weld circuit and an arc voltage of a welding arc of the weld circuit during an example welding operation, in accordance with aspects of this disclosure;
FIG. 5A illustrates a graph (x-axis: contact tip-to-work distance ("CTWD"); y-axis: output current) of example relationships between average current and contact tip-to-work distance, in accordance with aspects of this disclosure;
FIG. 5B illustrates a table of example relationships between voltage and average current, wire feed speed, and one or more electrode characteristics, in accordance with aspects of this disclosure;
FIG. 6 illustrates a graph (x-axis: time; y-axis: current/voltage) of measured voltages and measured currents of a welding system for use in some examples of calculation of arc voltage of a welding arc of the weld circuit during an example welding operation, in accordance with aspects of this disclosure; and
FIG. 7 illustrates a flowchart representative of example machine readable instructions which may be executed by the welding system of FIG. 1 to determine an arc voltage, an electrode extension voltage, and a contact tip-to-work voltage of a weld circuit and to control welding parameters during a welding operation, in accordance with aspects of this disclosure.

The figures are not necessarily to scale. Where appropriate, similar or identical reference numbers are used to refer to similar or identical components.

### DETAILED DESCRIPTION

When conducting a welding operation, sufficiency of a weld may be determined based on satisfaction of one or more welding codes. Welding codes often specify one or more ranges of one or more welding parameters for a specific weld, such as a range of acceptable currents and/or a range of acceptable voltages. Voltage across a contact tip-to-work distance ("CTWD") between a contact tip of a welding torch and a workpiece (the voltage across the CTWD being a "contact tip-to-work voltage" or "CTW voltage") and/or a portion of the CTW voltage corresponding to a welding arc between an electrode tip and a workpiece of the weld circuit (the voltage being an "arc voltage") can indicate the quality of a weld, e.g., because such voltages can generally determine and/or indicate an amount of heat applied to the workpiece. Accordingly, determining whether a weld created by a welding operation satisfies, e.g., one or more aspects of a welding code generally includes measuring or determining an arc voltage and/or a CTW voltage of a weld circuit of the welding operation.

Conventional systems struggle to accurately measure or determine arc voltage, because measurement of voltage at most locations along a weld circuit generally indicate an amount of voltage greater than a CTW voltage (and, thereby, an arc voltage) of the weld circuit. For example, voltage of a weld circuit is often measured at or near a power source of the weld circuit (such voltage being an "output voltage"), such as an output voltage measured at and/or otherwise associated with one or more terminals of a power supply of welding power (e.g., output studs, weld studs, etc.). However, weld circuits of welding operations generally include voltage drops in addition to an arc voltage of the weld circuit.

A sum total of all voltage drops in a weld circuit separate from arc voltage are referred to herein as "non-arc voltage." Non-arc voltage is generally caused by an unknown and/or variable amount of impedance (e.g., an amount of resistance or a function of any resistance, inductance, and/or capacitance of) in the weld circuit separate from an impedance of a welding arc and/or electrode of the weld circuit. Accordingly, a sum total of all impedance associated with non-arc voltage (e.g., an amount of resistance or a function of resistance, conductance, and/or inductance) is referred to herein as "non-arc impedance."

Non-arc impedance (and, thereby, non-arc voltage) is generally introduced to a weld circuit by an amount of resistance and/or capacitance provided by one or more components of the weld circuit external to the welding arc (e.g., welding cables, the workpiece, the welding torch, the electrode, and/or a power source of the weld circuit) and/or by an amount of inductance induced within the weld circuit (e.g., by a magnetic field generated by one or more components of the weld circuit, by a magnetic field external to the weld circuit, etc.). Accordingly, varying contexts of different welding operations (e.g., varying components, varying workpiece materials and/or electrode materials, etc.) may cause varying levels of impedance in a weld circuit separate from impedance of a welding arc.

Furthermore, non-arc impedance (and, thereby, non-arc voltage) of a weld circuit generally varies over the course of a single welding operation. For example, as a welding operation generates a weld along a workpiece, a length of the workpiece within the weld circuit and, thereby, a non-arc impedance of the weld circuit may increase or decrease. As another example, twisting or extending of a weld cable of a weld circuit may increase or decrease an amount of inductance within a weld circuit. Accordingly, two or more different measured voltages (e.g., output voltages) determined at different times during the same welding operation may include differing amounts of non-arc voltage and/or differing ratios of non-arc voltage to arc voltage.

Further still, arc voltage (and, thereby, CTW voltage) can vary with changes in arc length (e.g., due to amounts of impedance and/or resistance across the welding arc varying as CTWD varies). Arc length generally changes over the course of a welding operation due to, e.g., unsteadiness in a welding operator's hands, uneven workpiece surfaces, etc. In conventional systems, arc length is generally not constant and, instead, may change rapidly during a welding operation, e.g., due to changes in target welding parameters (e.g., target current or target voltage), changes in a weld circuit (e.g., as a welding arc is moved along a weld), welding parameter error (e.g., current error or voltage error), physical dynamics (e.g., of the weld or of the workpiece), unsteady handling of a welding torch and, thereby, changing CTWD of a weld circuit, etc.

Due to these and other challenges, conventional systems and methods generally determine arc voltage, electrode extension voltage, and/or CTW voltage by imposing additional requirements not otherwise necessary for conducting the ordinary course of the welding operation. For example, some such conventional systems and methods require that a welding operator and/or welding system possess, employ, and/or otherwise use devices (e.g., lead cables, probes, and/or sensors), processes (e.g., specific calibration routines, target welding parameters, and/or welding modes), measurements (e.g., measuring voltage by coupling leads to a contact tip and a workpiece), and/or setups (e.g., configurations of, coupling locations of, and/or couplings between one or more components and/or portions of a welding system) not otherwise necessary for conducting the welding operation.

For example, conventional systems and methods for measuring arc voltage, electrode extension voltage, and/or CTW voltage generally require the welding operator to both interrupt the ordinary course of a welding operation (e.g., to couple the voltmeter proximally to the welding arc) and take measurements not ordinarily taken during the ordinary course of the welding operation. Accordingly, conventional systems and methods for measuring arc voltage, electrode extension voltage, and/or CTW voltage generally add interruptions to welding operations, increase a duration of welding operations, increase an amount of steps required of a welding operator to conduct welding operations, increase an amount of devices required to conduct welding operations, introduce avenues for welding operator error (e.g., improper setups, processes, incomplete coupling of components, etc.), and/or otherwise introduce undesirable risks, burdens, and/or constraints on welding operators and/or during welding operations.

Attempts by conventional systems to directly measure arc voltage or CTW voltage thereby generally require a high degree of approximation. For example, a contact point of a welding arc on a workpiece may rapidly vary with respect to time, and so positioning an electrical coupling of a sensor directly at the contact point may be practically impossible due to, e.g., rapid and difficult-to-predict changes in the location of the contact point, heat generated by the welding arc melting the electrical coupling, etc. Furthermore, positioning an electrical coupling of a sensor directly at an electrode tip of a weld circuit may also be practically impossible due to, e.g., the welding arc melting the electrode tip. Accordingly, conventional systems generally approximate an arc voltage and/or CTW voltage of a weld circuit based on measurements obtained at points along the weld circuit that are distanced from the welding arc and that, thereby, are a sum of both an amount of arc voltage and/or CTW voltage that varies between measurements during a welding operation (e.g., due to changes in arc length and/or CTWD) and an additional amount of voltage that, e.g., varies between welding operations (e.g., due to differing components of such welding operations) and over the course of a single welding operation (e.g., due to varying lengths of one or more components of the weld circuit).

Disclosed example welding systems, methods, and control circuitry, however, determine arc voltage, electrode extension voltage, and/or CTW voltage based on two or more pairs of associated currents and voltages. Examples of pairs of associated currents and voltages, referred to herein as "current/voltage levels," comprise a voltage (e.g., output voltage) and a current (e.g., output current) that are determined at and/or during the same time and/or time period. To determine arc voltage, electrode extension voltage, and/or CTW voltage during a welding operation using such welding parameters (e.g., output current/voltage levels), some disclosed example welding systems, methods, and control circuitry compare two or more output current/voltage levels associated with (e.g., determined during) one or more arc length-controlled periods of the welding operation.

By using output current/voltage levels, some disclosed example welding systems, methods, and control circuitry can measure a plurality of current/voltage levels in a very short time span. For example, some disclosed welding systems, methods, and control circuitry may measure two distinct output current/voltage levels at measurement times differing by less than or equal to 30 milliseconds or even less than or equal to 0.5 microseconds. By measuring distinct output current/voltage levels in such short timespans, non-arc impedance of the weld circuit may be approximated as being constant or substantially constant. However, even in such short time spans, arc length of a welding arc of conventional welding systems can vary at unknown degrees.

As used herein, the term "arc length-controlled mode" refers to an operating mode of one or more components, systems, and/or processes of a welding operation wherein one or more welding parameters (e.g., voltage, current, enthalpy, power, resistance, wire feed speed, pulse width, pulse frequency, electrode extension length, etc.) are controlled and/or otherwise modified to reduce and/or substantially eliminate deviations in arc length of a welding arc from a target arc length (e.g., a single value or a range of values) during an arc length-controlled period.

Unlike conventional welding systems, disclosed example systems, methods, and control circuitry conduct welding operations containing one or more arc length-controlled periods. During an arc length-controlled period of a welding operation (e.g., some or all of a duration of the welding operation), disclosed example systems, methods, and control circuitry maintain an arc length of a welding arc by operating in an arc length-controlled mode. During a welding operation, arc voltage of a welding arc is generally predominantly determined by arc length of a welding arc, rather than by an amount of current (e.g., output current) in a welding circuit of the welding arc. Accordingly, when operating in an arc length-controlled mode, disclosed example systems, methods, and control circuitry presume that arc voltage generally remains constant or substantially constant relative to changes in output current. Based on this presumption, disclosed example systems, methods, and control circuitry can compare two or more differing current/voltage levels taken during an arc length-controlled period to determine an amount of arc voltage during the arc length-controlled period.

Some disclosed example welding systems, methods, and control circuitry may operate in an arc length-controlled mode based on one or more feedback parameters. For example, measured voltage or measured power may be used to indicate arc length and, thereby, be used to determine one or more welding parameter modifications in response to a detected change in arc length. An arc length controlled mode may also be conducted by operating in a welding parameter-controlled mode, such as a voltage-controlled mode or a power-controlled mode. However, because arc voltage changes predominantly as a function of arc length, rather than output current, and because weld circuits may include other sources of resistance, inductance, and/or impedance, such methods for arc length control may be associated with high levels of inaccuracy.

However, some disclosed example welding systems, methods, and control circuitry operate in an arc length-controlled mode by adjusting one or more welding parameters based on one or more short circuit parameters measured during a pulsed welding process (e.g., GMAW) that utilizes "pulses" (e.g., a controlled increase of voltage, current, power, enthalpy, resistance, etc. of welding power for a defined period of time). A pulsed welding process may employ one or more "pulse cycles." A pulse cycle may alternate between one or more higher-voltage "peak" phases (e.g., pulses) and one or more other phases (e.g., a lower-voltage "background" phase). In some cases, short circuit events may be unintentional or inadvertent. However, in some disclosed examples, a pulsed welding process is configured to cause a short circuit event after each pulse, thereby causing short circuit events to occur both frequently (e.g., one or more short circuit events per second) and regularly (e.g., at or near one or more predetermined time intervals). Because measured short circuit parameters of short circuit events can indicate a distance between an electrode tip and a workpiece, and because disclosed examples are configured to regularly cause such short circuit events, measuring short circuit parameters of one or more short circuit events provide a method for operating in an arc length-controlled mode with a higher level of precision and with a more rapid rate of correction than other modalities of arc length control.

In an example pulse cycle, a pulse creates a molten ball at a tip of an electrode (e.g., welding wire) of the welding system and deposits the molten ball of material onto a workpiece. For example, a higher voltage of a peak phase of a pulse cycle may melt a greater amount of the electrode than a lower voltage of a background phase of the pulse cycle. The molten ball may be deposited to a weld pool on the workpiece, and the molten ball may briefly join the electrode to the weld pool in a short circuit event that decreases weld voltage (e.g., to a voltage level below a target voltage of a background phase). By measuring one or more parameters of a short circuit event, disclosed examples determine one or more aspects of a welding system and/or a welding operation, such as by determining an arc length of a welding arc based on a measured duration of a short circuit event (a "short circuit duration"). Accordingly, disclosed examples may control one or more aspects of a welding system and/or a welding operation by modifying one or more welding parameters based on one or more measured and/or determined parameters of one or more short circuit events. In some examples, one or more other welding modes and/or transfer modes may be used.

A short circuit parameter may be used, e.g., to determine one or more parameters of a welding system and/or as a proxy for one or more parameters of a welding system. For example, a short circuit duration may indicate an arc length of a welding arc. A short circuit duration that is shorter than a target short circuit duration may indicate that the tip of the electrode of the welding system is too far from the workpiece (e.g., because a molten ball may join an electrode and a weld pool for a shorter period of time when the electrode is further from the weld pool). Conversely, a short circuit duration that is longer than a target short circuit duration may indicate that the tip of the electrode of the welding system is too close to the workpiece, e.g., because a molten ball may join an electrode and a weld pool for a longer period of time when the electrode is closer to the weld pool.

Accordingly, some disclosed examples operate in an arc length-controlled mode by comparing a target short circuit parameter to a measured short circuit parameter and adjusting one or more welding parameters (e.g., target voltage, target current, target enthalpy, target power, target resistance, target wire feed speed, pulse width, pulse frequency, etc.) based on a difference (if any) between the measured short circuit parameter and the target short circuit parameter. A short circuit parameter may include a short circuit duration and/or one or more other measurable qualities of one or more short circuit events.

For example, increasing a wavelength width, increasing a pulse width, increasing a wavelength frequency, increasing a pulse frequency, increasing a target voltage, increasing a target current, increasing a ramping up rate, and/or decreasing a ramping down rate may cause an electrode to melt faster due to increased heat being applied to the electrode. By melting the electrode faster, a distance between a tip of the electrode and a weld pool and, thereby, arc length of a welding arc may increase by decreasing a length of an electrode extension of the electrode (e.g., a distance the electrode extends past a contact tip of a welding torch). Conversely, the electrode can be made to melt slower, e.g., by decreasing a wavelength width, decreasing a pulse width, decreasing a wavelength frequency, decreasing a pulse frequency, decreasing a target voltage, decreasing a target current, decreasing a ramping up rate, and/or increasing a ramping down rate. Accordingly, one or more welding parameters may be automatically controlled based on measured short circuit duration to maintain and/or control an arc length of a welding arc.

A background phase may have a duration of, e.g., greater than or equal to 1 millisecond ("ms") and/or less than or equal to 25 ms. A peak phase may have a duration of, e.g., greater than or equal to 1 ms and less than or equal to 3 ms. Accordingly, during some disclosed example pulse welding operations, 300 or more short circuit events may occur per second. Due to such high frequencies of short circuit events, using one or more measured parameters of such short circuit events for controlling one or more welding parameters of a welding system and/or a welding operation may enable very rapid adjustment of such welding parameters. Some disclosed examples may, thereby, automatically, quickly, and/or accurately determine and/or implement modifications to one or more welding parameters by comparing one or more measured short circuit parameters (e.g., a measured short circuit duration) with one or more target short circuit parameters (e.g., a target short circuit duration) to control one or more aspects of a welding system and/or a welding process (e.g., arc length of a welding arc). Accordingly, some disclosed examples reduce and/or substantially eliminate deviations in arc length of the welding arc from a target arc length (e.g., a single value or a range of values) while operating in an arc length-controlled mode.

By measuring two or more differing current/voltage levels while operating in an arc length-controlled mode, some disclosed example welding systems, methods, and control circuitry thereby can determine arc voltage, CTW voltage, and/or electrode extension voltage at a higher degree of accuracy than conventional welding systems. For example, disclosed example welding systems, methods, and control circuitry can presume with a low margin of error both that non-arc impedance between two output current/voltage levels is substantially constant (e.g., due to the brevity of an amount of time between each measurement) and that arc length (and, thereby, arc voltage) between each current/voltage level is also substantially constant. Using these presumptions, disclosed example welding systems, methods, and control circuitry can thereby utilize two or more current/voltage levels already determined in the ordinary course of a welding operation (e.g., output current/voltage levels) to determine arc voltage, electrode extension voltage, and/or CTW voltage, e.g., without imposing additional requirements not otherwise necessary for conducting the ordinary course of the welding operation.

Accordingly, some disclosed examples determine an arc voltage at a speed limited, e.g., substantially only by a sampling rate of a voltage sensor (e.g., having a sampling rate less than or equal to 30 milliseconds per sample ("m/s"), a sampling rate of 25 microseconds per sample ("µs/S"), etc.), a sampling rate of a current sensor (e.g., having a sampling rate less than or equal to 30 ms/S, a sampling rate of 25 µs, etc.), and/or a processing speed of control circuitry. In some examples, arc voltage may thereby determined at a sampling rate of less than or equal to 60 ms/S (e.g., 50 µs/S).

Additionally, some disclosed examples determine arc voltage based on voltages and/or currents (e.g., output voltages and/or output currents) commonly determined and/or measured throughout most or all of the ordinary course of a welding operation, and so some such disclosed examples thereby enable determination of arc voltage without modification and/or interruption of a welding operation. Accordingly, some disclosed example systems, methods, and control circuitry determine arc voltage much more quickly than conventional systems and methods for determining arc voltage, e.g., because some such disclosed examples determine arc voltage based without the use of devices, processes, measurements, and/or setups not otherwise used in the ordinary course of the welding operation.

Further, some disclosed example welding systems, methods, and control circuitry determine electrode extension voltage (e.g., voltage of an electrode extension of an electrode) based on average current and wire feed speed. For example, electrode extension voltage can be determined based on an electrode extension length, electrode extension area, electrode conductivity or resistivity, and output current. Some disclosed example welding systems, methods, and control circuitry operate in an arc length-controlled mode (e.g., based on one or more short circuit parameters) and, thereby, determine electrode extension length based on wire feed speed and average output current. For example, if contact tip-to-work distance is increased while operating in an arc length-controlled mode, some disclosed example welding systems, methods, and control circuitry modify one or more welding parameters to increase electrode extension length to maintain a substantially constant arc length, and increases in electrode extension length increase total resistance and/or impedance of the electrode extension and, thereby, decrease average current. Accordingly, disclosed example welding systems, methods, and control circuitry determine contact tip-to-work distance as a function of average current (e.g., a measured moving average current) and wire feed speed (e.g., a target wire feed speed or a measured wire feed speed). Because arc length can either be determined (e.g., based on short circuit duration) or presumed (e.g., to be substantially equal to a target arc length) while operating in an arc length-controlled mode, some disclosed example welding systems, methods, and control circuitry determine electrode extension length by subtracting arc length from a determined contact tip-to-work distance.

Accordingly, some disclosed example welding systems, methods, and control circuitry determine electrode extension voltage based on wire feed speed, average output current, arc length, electrode conductivity and/or resistivity (e.g., as a known value of the electrode), and electrode area (e.g., as a known value of the electrode). Because wire feed speed, average output current, and arc length may be commonly measured or known during a welding operation while operating in an arc length-controlled mode, some disclosed example welding systems, methods, and control circuitry determine electrode extension voltage without the use of additional devices, processes, measurements, and/or setups not otherwise used in the ordinary course of a welding operation.

Some disclosed example welding systems, methods, and control circuitry measure both arc voltage and electrode extension voltage during a welding operation and, thereby, determine CTW voltage as a sum of arc voltage and electrode extension voltage. Disclosed example welding systems, methods, and control circuitry thereby determine arc voltage, electrode extension voltage, and/or CTW voltage during a welding operation (e.g., during an arc length-controlled period of a welding operation), e.g., based on two or more pairs of output voltage and output current, wire feed speed, average output current, electrode conductivity or resistivity, electrode area, and/or arc length (e.g., a target arc length or a determined arc length). Accordingly, some disclosed example welding systems, methods, and control circuitry thereby determine arc voltage, electrode extension voltage, and/or CTW voltage without the use of additional devices, processes, measurements, and/or setups not otherwise used in the ordinary course of a welding operation.

Disclosed example welding systems comprise: power conversion circuitry configured to convert input power to welding power and output the welding power to a weld circuit during a welding operation; a current sensor configured to measure an output current of the power conversion circuitry and generate a current sensor signal comprising a measured current; and control circuitry configured to: control the power conversion circuitry to output the welding power according to one or more first welding parameters; and determine a contact tip-to-work voltage of a welding arc of the weld circuit by: monitoring the current sensor signal during a first portion of the welding operation to determine a first output current of the weld circuit; monitoring the current sensor signal during a second portion of the welding operation to determine a second output current of the weld circuit; and determining the contact tip-to-work voltage based on the first output current and the second output current.

In some example welding systems, the current sensor is electrically coupled to at least one output terminal of the one or more output terminals of the power conversion circuitry to measure the output current of the power conversion circuitry.

In some example welding systems, the control circuitry is further configured to: determine an average output current of the weld circuit based on the sensor signal of the welding operation; and determine the contact tip-to-work voltage based on the average output current, a wire feed speed of the electrode, and one or more predetermined average current/wire feed speed relationships. In some such example welding systems, the welding system further comprises a voltage sensor configured to generate a voltage sensor signal, wherein the control circuitry is further configured to: determine an electrode extension voltage of the weld circuit based on the average output current, the wire feed speed of the electrode, and the one or more predetermined average current/wire feed speed relationships; calculate an arc voltage by comparing the first output current and a first output voltage associated with the first output current to the second output current and a second output voltage associated with the second output current; and calculate the contact tip-to-work voltage of the weld circuit based on the arc voltage and the electrode extension voltage. In some such example welding systems, the determining of the electrode extension voltage comprises: determining an electrode extension length of the electrode extension based on the average output current, the wire feed speed, the one or more predetermined average current/wire feed speed relationships, and at least one of an arc length of the weld circuit or a target arc length of the arc length-controlled mode; and calculating the electrode extension voltage based on the electrode extension length and the average current.
In some such example welding systems, the determining of the calculating of the electrode extension voltage is further based on one or more electrode extension characteristics of the electrode.

In some example welding systems, the welding system further comprises a voltage sensor configured to generate a voltage sensor signal, wherein the control circuitry is further configured to: control the power conversion circuitry to output the welding power in an arc length-controlled mode during one or more arc length-controlled periods of the welding operation; determine an average output current of the weld circuit based on the sensor signal of the welding operation; determine an electrode extension voltage of the weld circuit based on the average output current, the wire feed speed of the electrode, and the one or more predetermined average current/wire feed speed relationships; calculate an arc voltage by comparing the first output current and a first output voltage associated with the first output current to the second output current and a second output voltage associated with the second output current; and calculate the contact tip-to-work voltage of the weld circuit based on the arc voltage and the electrode extension voltage, wherein each of the first output current, the first output voltage, the second output current, and the second output voltage are measured during the one or more arc length-controlled periods of the welding operation.

In some example welding systems, the welding system further comprises a voltage sensor configured to generate a voltage sensor signal, wherein the control circuitry is further configured to: determine an average output current of the weld circuit based on the sensor signal of the welding operation; determine an electrode extension voltage of the weld circuit based on the average output current, the wire feed speed of the electrode, and the one or more predetermined average current/wire feed speed relationships; calculate an arc voltage by comparing the first output current and a first output voltage associated with the first output current to the second output current and a second output voltage associated with the second output current; and calculate the contact tip-to-work voltage of the weld circuit based on the arc voltage and the electrode extension voltage, wherein each of the first output current, the first output voltage, the second output current, and the second output voltage are measured during one or more non-ramping periods of the welding operation.

In some example welding systems, the control circuitry is further configured to: determine an average output current of the weld circuit based on the sensor signal of the welding operation; and determine the contact tip-to-work voltage based on the average output current, a wire feed speed of the electrode, and one or more predetermined average current/wire feed speed relationships, wherein the plurality of predetermined average current/wire feed speed relationships comprise one or more predetermined lookup tables associating each predetermined voltage of a plurality of predetermined voltages with a respective predetermined wire feed speed of a plurality of predetermined wire feed speeds and a respective predetermined average current of a plurality of predetermined average currents. In some such example welding systems, the one or more predetermined lookup tables further associate each predetermined voltage of the plurality of predetermined voltages with one or more respective electrode characteristics.

In some example welding systems, the control circuitry is further configured to: determine an average output current of the weld circuit based on the sensor signal of the welding operation; and determine the contact tip-to-work voltage based on the average output current, a wire feed speed of the electrode, and one or more predetermined average current/wire feed speed relationships, wherein the determining of the contact tip-to-work voltage is further based on one or more electrode characteristics of the electrode, the one or more electrode characteristics comprising at least one of: a wire size of the electrode; a wire area of the electrode; a material of the electrode; a resistivity of the electrode; a conductivity of the electrode; a specific heat of the electrode; a melting temperature of the electrode; a wire type of the electrode; or a temperature of the electrode.

In some example welding systems, the control circuitry is further configured to: monitor the current sensor signal to determine a plurality of measured currents; and determine an average output current of the weld circuit based on the sensor signal of the welding operation, wherein the average current of the weld circuit is a moving average current calculated based on the plurality of measured currents; and determine the contact tip-to-work voltage based on the average output current, a wire feed speed of the electrode, and one or more predetermined average current/wire feed speed relationships.

In some example welding systems, the first output current is measured during a first phase of the welding operation and the second output current is measured during a second phase of the welding operation.

In some example welding systems, the first output current and the second output current are measured during one or more non-ramping periods of the welding operation.

In some example welding systems, the control circuitry is configured to control the power conversion circuitry to output the welding power in an arc length-controlled mode during one or more arc length-controlled periods of the welding operation; and the first output current and the second output current are measured during one or more arc length-controlled periods of the welding operation. In some such example welding systems, the welding system further comprises a voltage sensor configured to generate a voltage sensor signal, wherein the outputting of the welding power in the arc length-controlled mode comprises: controlling the power conversion circuitry to output the welding power according to one or more initial welding parameters of the one or more first welding parameters, the one or more initial welding parameters comprising an initial waveform; monitoring the voltage sensor signal during at least a portion of the initial waveform to determine one or more short circuit parameters of one or more short circuit events; determining one or more subsequent welding parameters of the one or more first welding parameters based on the one or more initial welding parameters and the one or more short circuit parameters; and controlling the power conversion circuitry to output the welding power according to the one or more subsequent welding parameters.

In some such example welding systems, the one or more short circuit parameters comprise a short circuit duration.

In some example welding systems, the control circuitry is further configured to: determine one or more second welding parameters based on the contact tip-to-work voltage; and control the power conversion circuitry to output the welding power according to the one or more second welding parameters.

In some example welding systems, the control circuitry is further configured to display the contact tip-to-work voltage on a user interface.

In some example welding systems, the power conversion circuitry is configured to output the welding power according to at least one of: a gas-metal arc welding (GMAW) or metal inert gas welding (MIG) operation; a pulsed gas-metal arc welding (GMAW-P) or pulsed metal inert gas (MIG) welding operation; a current-controlled welding operation; a voltage-controlled welding operation; a power-controlled welding operation; a resistance-controlled welding operation; an enthalpy-controlled welding operation; a tungsten inert gas welding (TIG) or gas tungsten arc welding (GTAW) operation; a flux cored arc welding (FCAW) operation; a shielded metal arc welding (SMAW) or stick welding operation; a plasma cutting operation; a plasma welding operation; a spray welding operation; a short circuit transfer welding operation; a pulse welding operation; or a pulsed spray welding operation.

Disclosed example welding systems comprise: power conversion circuitry configured to convert input power to welding power and output the welding power to a weld circuit during a welding operation; a voltage sensor configured to measure an output voltage of the power conversion circuitry and generate a voltage sensor signal comprising a measured voltage; a current sensor configured to measure an output current of the power conversion circuitry and generate a current sensor signal comprising a measured current; and control circuitry configured to: control the power conversion circuitry to output the welding power according to one or more first welding parameters and an arc length-controlled mode during an arc length-controlled period of the welding operation; and determine an arc voltage of a welding arc of the weld circuit by: monitoring the voltage sensor signal and the current sensor signal during a first portion of the arc length-controlled period to determine a first output voltage and a first output current of the weld circuit; monitoring the voltage sensor signal and the current sensor signal during a second portion of the arc length-controlled period to determine a second output voltage and a second output current of the weld circuit; and calculating the arc voltage based on the first output voltage, the second output voltage, the first output current, and the second output current.

In some example welding systems, the voltage sensor is electrically coupled to at least one output terminal of one or more output terminals of the power conversion circuitry to measure the output voltage of the power conversion circuitry; and the current sensor is electrically coupled to at least one output terminal of the one or more output terminals of the power conversion circuitry to measure the output current of the power conversion circuitry.

In some example welding systems, the calculating of the arc voltage is based on: a first difference between the first output voltage and the second output voltage; and a second difference between the first output current and the second output current.

In some example welding systems, the control circuitry is further configured to: determine an average output current of the weld circuit based on the sensor signal during the arc length controlled-period of the welding operation; determine an electrode extension voltage of the weld circuit based on the average output current, a wire feed speed of the electrode, and one or more predetermined average current/wire feed speed relationships; and calculate a contact tip-to-work voltage of the weld circuit based on the arc voltage and the electrode extension voltage. In some such example welding systems, the plurality of predetermined average current/wire feed speed relationships comprise one or more predetermined lookup tables associating each predetermined electrode extension voltage of a plurality of predetermined electrode extension voltages with a respective predetermined wire feed speed of a plurality of predetermined wire feed speeds and a respective predetermined average current of a plurality of predetermined average currents. In some such example welding systems, the one or more predetermined lookup tables further associate each predetermined electrode extension voltage of the plurality of electrode extension voltages with one or more respective electrode characteristics.

In some example welding systems, the control circuitry is further configured to: determine an average output current of the weld circuit based on the sensor signal during the arc length controlled-period of the welding operation; determine an electrode extension voltage of the weld circuit based on the average output current, a wire feed speed of the electrode, and one or more predetermined average current/wire feed speed relationships; and calculate a contact tip-to-work voltage of the weld circuit based on the arc voltage and the electrode extension voltage, wherein the determining of the electrode extension voltage comprises: determining an electrode extension length of the electrode extension based on the average output current, the wire feed speed, the one or more predetermined average current/wire feed speed relationships, and at least one of an arc length of the weld circuit or a target arc length of the arc length-controlled mode; and calculating the electrode extension voltage based on the electrode extension length and the average current. In some such example welding systems, the calculating of the electrode extension voltage is further based on one or more electrode characteristics of the electrode.

In some example welding systems, the control circuitry is further configured to: determine an average output current of the weld circuit based on the sensor signal during the arc length controlled-period of the welding operation; determine an electrode extension voltage of the weld circuit based on the average output current, a wire feed speed of the electrode, and one or more predetermined average current/wire feed speed relationships; and calculate a contact tip-to-work voltage of the weld circuit based on the arc voltage and the electrode extension voltage, wherein the determining of the electrode extension voltage is further based on one or more electrode characteristics of the electrode, the one or more electrode characteristics comprising at least one of: a wire size of the electrode; a wire area of the electrode; a material of the electrode; a resistivity of the electrode; a conductivity of the electrode; a specific heat of the electrode; a melting temperature of the electrode; a wire type of the electrode; or a temperature of the electrode.

In some example welding systems, the control circuitry is further configured to: monitor the current sensor signal to determine a plurality of measured currents; calculate a moving average output current based on the plurality of measured currents during the arc length controlled-period of the welding operation; determine an electrode extension voltage of the weld circuit based on the moving average output current, a wire feed speed of the electrode, and one or more predetermined average current/wire feed speed relationships; and calculate a contact tip-to-work voltage of the weld circuit based on the arc voltage and the electrode extension voltage.

In some example welding systems, the first portion of the arc length-controlled period is during a first phase of the welding operation and the second portion of the arc-length controlled period is in a second phase of the welding operation distinct from the first phase.

In some example welding systems, the outputting of the welding power in the arc length-controlled mode comprises: controlling the power conversion circuitry to output the welding power according to one or more initial welding parameters of the one or more first welding parameters, the one or more initial welding parameters comprising an initial waveform; monitoring the voltage sensor signal during at least a portion of the initial waveform to determine one or more short circuit parameters of one or more short circuit events; determining one or more subsequent welding parameters of the one or more first welding parameters based on the one or more initial welding parameters and the one or more short circuit parameters; and controlling the power conversion circuitry to output the welding power according to the one or more subsequent welding parameters. In some such example welding systems, the one or more initial welding parameters comprise at least one of an initial ramping up rate, an initial wire feed speed, an initial first ramp down rate, an initial target voltage, an initial target current, an initial target power, an initial target resistance, an initial target enthalpy, an initial phase duration of an initial phase of one or more initial pulse cycles of the initial waveform, an initial duration of an initial portion of the initial waveform, or an initial waveform frequency; and the one or more subsequent welding parameters comprise at least one of a subsequent ramping up rate, a subsequent ramping down rate, a subsequent wire feed speed, a subsequent target voltage, a subsequent target current, a subsequent target power, a subsequent target resistance, a subsequent target enthalpy, a subsequent duration of a subsequent phase duration of one or more subsequent pulse cycles of a subsequent waveform, a subsequent duration of a subsequent portion of the subsequent waveform, or a subsequent waveform frequency.

In some example welding systems, the first portion of the arc length-controlled period comprises a first phase portion of a phase of one or more pulse cycles of the one or more first welding parameters; and the second portion of the arc length-controlled period comprises a second phase portion of the phase of the one or more pulse cycles.

In some example welding systems, one or more non-ramping periods of the welding operation comprise the first portion of the arc length-controlled period and the second portion of the arc length-controlled period.

In some example welding systems, the first output voltage is a first average voltage; the second output voltage is a second average voltage; the first output current is a first average current; the second output current is a second average current; and the control circuitry is further configured to: calculate the first average voltage based on a plurality of first measured voltages of the first portion of the arc length-controlled period; calculate the first average current based on a plurality of first measured currents of the first portion of the arc length-controlled period; calculate the second average voltage based on a plurality of second measured voltages of the second portion of the arc length-controlled period; and calculate the second average current based on a plurality of second measured currents of the second portion of the arc length-controlled period. In some such example welding systems, the first portion of the arc length-controlled period comprises at least a portion of a first phase of one or more pulse cycles of the one or more first welding parameters; and the second portion of the arc length-controlled period comprises at least a portion of a second phase of the one or more pulse cycles.

In some example welding systems, the control circuitry is further configured to: determine a display voltage based at least on the arc voltage; and display the display voltage on a user interface.

In some example welding systems, the control circuitry is further configured to: determine one or more second welding parameters based on the arc voltage; and control the power conversion circuitry to output the welding power according to the one or more second welding parameters.

In some example welding systems, the power conversion circuitry is configured to output the welding power according to at least one of: a gas-metal arc welding (GMAW) or metal inert gas welding (MIG) operation; a pulsed gas-metal arc welding (GMAW-P) or pulsed metal inert gas (MIG) welding operation; a current-controlled welding operation; a voltage-controlled welding operation; a power-controlled welding operation; a resistance-controlled welding operation; an enthalpy-controlled welding operation; a tungsten inert gas welding (TIG) or gas tungsten arc welding (GTAW) operation; a flux cored arc welding (FCAW) operation; a shielded metal arc welding (SMAW) or stick welding operation; a plasma cutting operation; a plasma welding operation; a spray welding operation; a short circuit transfer welding operation; a pulse welding operation; or a pulsed spray welding operation.

As used herein, the term "welding parameter-controlled mode" (as in, e.g., a "voltage-controlled mode," a "current-controlled mode," a "power-controlled mode," a "resistance-controlled mode," an "enthalpy-controlled mode," etc.) refers to an operating mode of one or more components, systems, and/or processes of a welding operation (e.g., of power conversion circuitry, a generator, one or more other sources of welding power, a wire feeder, control circuitry, etc.) wherein one or more welding parameters are controlled and/or otherwise modified based on a difference between one or more measured welding parameters and one or more respective target welding parameters (e.g., one or more target values, one or more target threshold values, one or more target ranges of values, etc.). For example, when controlling power conversion circuitry to output welding power to a weld circuit in a voltage-controlled mode, control circuitry may control the power conversion circuitry to increase or decrease an output current (e.g., a number of amps) of the power conversion circuitry and/or one or more other welding parameters based on a difference between a measured voltage of the weld circuit and a target voltage.

As used herein, a "target" welding parameter (e.g., a "target voltage," a "target current," a "target power," a "target resistance," a "target enthalpy," etc.) refers to one or more inputs associated with a welding parameter according to which a welding system operating in a controlled mode (e.g., a voltage-controlled mode, a current-controlled mode, a power-controlled mode, an enthalpy-controlled mode, a resistance-controlled mode, etc.) controls and/or otherwise modifies one or more other welding parameters based on differences between a measured welding parameter and the target welding parameter. A target welding parameter may include one or more values (e.g., 24V), one or more value ranges (e.g., 23V-25V), one or more threshold values (e.g., ≥ 23V, < 25V), etc.

As used herein, a welding parameter "setpoint" (e.g., a voltage setpoint, a current setpoint, a power setpoint, a resistance setpoint, an enthalpy setpoint, a wire feed speed setpoint, etc.) refers to an input (e.g., one or more voltage values, one or more current values, one or more power values, one or more resistance values, one or more enthalpy values, one or more wire feed speed values, etc.) to a device and/or system of a welding system (e.g., a power converter, a wire feeder, a welding torch, a power source, etc.), e.g., via a user interface, network communication, weld procedure specification, or other selection method.

As used herein, the term "pulse cycle" refers to a group two or more phases according to which a welding operation is conducted, wherein one or more welding parameters are varied between at least two phases. For example, a pulse cycle may comprise a peak phase and a background phase, and a target peak voltage of the peak phase may be greater than a target background voltage of the background phase. A pulse cycle may include, e.g., one or more background phases, one or more peak phases, one or more wetting phases, one or more dabbing phases, one or more intermediate phases, and/or one or more other phases.

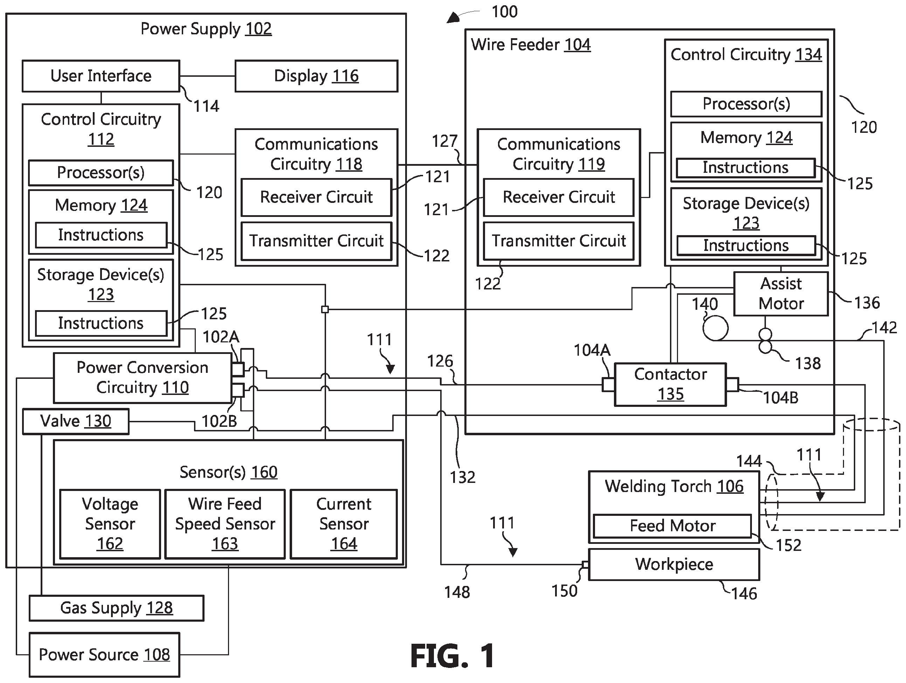

Turning now to the drawings, FIG. 1 is a block diagram of an example system 100. The system 100 is a welding system having a power supply 102, a wire feeder 104, and a welding torch 106. The system 100 powers, controls, and supplies consumables (e.g., an electrode) to a welding application. In some examples, the power supply 102 directly supplies input power to the welding torch 106. The welding torch 106 may be a torch configured for one or more welding modes, such as any, some, or all of GMAW/MIG, GMAW-P/pulsed MIG, SMAW/stick welding, current-controlled welding, voltage-controlled welding, enthalpy-controlled welding, power-controlled welding, resistance-controlled welding, TIG/GTAW, FCAW, plasma cutting, plasma welding, spray welding, short circuit transfer welding, pulse welding, pulsed spray welding, and/or one or more other welding modes based on the desired welding application.

In the example illustrated in FIG. 1, the power supply 102 is configured to supply welding power to the wire feeder 104, and the wire feeder 104 may be configured to route the welding power to the welding torch 106. In some examples, the wire feeder 104 also provides an electrode 142 (e.g., welding wire) to the welding torch 106, and the welding torch 106 may provide the welding power to the electrode 142, e.g., to create and/or maintain a welding arc between the electrode 142 and a workpiece 146. In addition to supplying an input power and/or the electrode 142 to the welding torch 106, the wire feeder 104 may supply a filler metal to a welding torch 106 for various welding applications (e.g., GMAW). While example of the system 100 depicted in FIG. 1 includes the wire feeder 104 (e.g., for GMAW operations), the wire feeder 104 may be replaced by any other type of remote accessory device, such as a stick welding and/or TIG welding remote control interface that provides stick and/or TIG welding.

The power supply 102 receives input power from a power source 108 (e.g., an engine, an electric motor, a generator, an AC power grid, a battery, one or more other energy-generating or - storage devices, and/or any combination thereof), conditions the input power, and provides an output power to one or more welding devices in accordance with demands of the system 100. The power source 108 may be supplied from an offsite location (e.g., the input power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes) and/or by one or more aspects of the input power (e.g., frequency, voltage, current, etc.).

The power conversion circuitry 110 can convert input power (e.g., the input power received from the power source 108 as AC power) to welding power (e.g., DC power) and output the welding power to a weld circuit. For example, the power conversion circuitry 110 may output welding power to a weld circuit 111 defined, at least in part, by the electrode 142 and the workpiece 146. In some examples, the power conversion circuitry 110 may output welding power based on one or more target weld parameters (e.g., one target welding parameter, a plurality of target welding parameters associated with one or more respective and/or distinct time values, etc.) to control the weld parameter according to the target value. For example, the power conversion circuitry 110 may output welding power based on one or more target voltages, one or more target currents, one or more target powers, one or more target resistances, one or more target enthalpies, and/or one or more other target welding parameters. In some examples, a target welding parameter may be determined and/or modified by, e.g., one or more control loops (e.g., when power conversion circuitry is operating in a voltage-controlled mode, a current-controlled mode, an enthalpy-controlled mode, a power-controlled mode, a resistance-controlled mode, etc.), control circuitry, one or more setpoints, etc. In some examples, the power conversion circuitry 110 is configured to convert the input power received from the power source 108 to both welding power and one or more auxiliary power outputs. An auxiliary power may include, e.g., an arc starting power (e.g., a power configured to initiate an arc between the electrode 142 and the workpiece 146) and/or an input power for a one or more auxiliary devices (e.g., a sensor, a computing device, a light, a grinder, etc.).

The power supply 102 includes control circuitry 112 to control the operation of the power supply 102. The power supply 102 also includes a user interface 114. The control circuitry 112, which is also referred to as a "controller," receives input from the user interface 114, through which a user may choose a process and/or input desired parameters (e.g., voltages, currents, resistances, enthalpies, powers, wire feed speeds, short circuit durations, arc lengths, one or more other setpoints, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with other welding devices within the system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1, the control circuitry 112 communicates with the wire feeder 104 via the weld circuit 111 and communications circuitry 118, as described below.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors ("DSPs").

The example control circuitry 112 includes one or more storage device(s) 123 and one or more memory device(s) 124. The storage device(s) 123 (e.g., nonvolatile storage, one or more non-transitory computer-readable medium(s)) may include ROM, flash memory, a hard drive, and/or any other suitable optical, magnetic, and/or solid-state storage medium(s), and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch (e.g., the welding torch 106), a distance between the contact tip and a workpiece (e.g., the workpiece 146), a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from one or more first power supply terminals 102A (e.g., output terminals) of the power supply 102 (e.g., of the power conversion circuitry 110) and one or more first wire feeder terminals 104A (e.g., input terminals) of the wire feeder 104 (e.g., of a contactor 135 of the wire feeder 104), e.g., to enable ease of replacement of the weld cable 126 in case of wear or damage. Furthermore, in some examples, welding data is provided with the weld cable 126 such that welding power and weld data are provided and transmitted together over the weld cable 126. The communications circuitry 118 may be communicatively coupled to the weld cable 126 to communicate (e.g., send/receive) data over the weld cable 126. The communications circuitry 118 may be implemented based on various types of power line communications methods and techniques. For example, the communications circuitry 118 may utilize hardware compliant with one or more high-speed broadband over power lines ("BPL") standard (e.g., IEEE standard 1901.X-compliant wired communications hardware) to provide data communications over the weld cable 126. In this manner, the weld cable 126 may be utilized to provide welding power from the power supply 102 to the wire feeder 104 and the welding torch 106. Additionally or alternatively, a communication cable 127 may be used to transmit and/or receive data communications between the communications circuitry 118 and a similar communications circuitry 119 of the wire feeder 104.

The example communications circuitry 118 includes a receiver circuit 121 and a transmitter circuit 122. Generally, the receiver circuit 121 receives data transmitted by the wire feeder 104 and the transmitter circuit 122 transmits data to the wire feeder 104. In some examples, the receiver circuit 121 receives communication(s) via the weld circuit 111 while welding power is flowing through the weld circuit 111 (e.g., during a welding operation) and/or after the welding power has stopped flowing through the weld circuit 111 (e.g., after a welding operation).

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the system 100 does not include the gas supply 128, the valve 130, and/or the cable 132.

In some examples, the wire feeder 104 uses the welding power to power the various components in the wire feeder 104, such as to power a wire feeder control circuitry 134. As noted above, the weld cable 126 may be configured to provide or supply the welding power. The power supply 102 may also communicate with a communications circuitry 119 of the wire feeder 104 using the weld cable 126 and the communications circuitry 118 disposed within the power supply 102. In some examples, the communications circuitry 119 is substantially similar or identical in construction and/or function as the communications circuitry 118 of the power supply 102. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

The contactor 135 (e.g., high amperage relay) is controlled by the wire feeder control circuitry 134 and configured to enable or inhibit welding power to continue to flow from the weld cable 126 for the welding application. In some examples, the contactor 135 is an electromechanical device. However, the contactor 135 may be any other suitable device, such as a solid-state device, and/or may be omitted when the power supply 102 is configured to control the output of welding power to the welding torch 106. The control circuitry 112 and/or the wire feeder control circuitry 134 may control the contactor 135 to close and/or open to provide power to the welding torch 106. The wire feeder 104 includes an assist motor 136 that receives control signals from the wire feeder control circuitry 134 to drive rollers 138 that rotate to pull the electrode 142 (e.g., welding wire) off a spool 140. The spool 140 may be, e.g., a spool of wire when the electrode 142 is welding wire. The spool 140 may be any mechanically-retrievable storage mechanism for the electrode 142. The electrode 142 is provided to the welding application through a torch cable 144. Likewise, the wire feeder 104 may provide the shielding gas from the cable 132 through the torch cable 144. The electrode 142, the shield gas, and the welding power received from the weld cable 126 may be bundled together in a single one of the torch cable 144, in multiple ones of the torch cable 144, and/or individually provided to the welding torch 106. In some examples, the torch cable 144 and/or one or more other cables is attachable and detachable from one or more second wire feeder terminals 104B (e.g., output terminals) of the wire feeder 104 (e.g., of the contactor 135), e.g., to receive the welding power output through the weld cable 126 and/or to provide the welding power to the electrode 142.

The welding torch 106 delivers the electrode 142, welding power, and/or shielding gas for a welding application. The welding torch 106 is used to establish a welding arc between the welding torch 106 and the workpiece 146. A work cable 148 couples the workpiece 146 to one or more second power supply terminals 102B (e.g., input terminals) of the power supply 102 (e.g., of the power conversion circuitry 110) to provide a return path for the welding power (e.g., as part of the weld circuit 111). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

The example welding torch 106 includes a feed motor 152, which is configured to pull the electrode 142 from the wire feeder 104 to the welding torch 106 to feed the wire to a welding arc during welding operations. The feed motor 152 may be controlled to advance the electrode 142 at one or more wire feed speeds. The feed motor 152 may also be controlled to hold the electrode 142 in a stopped condition. When controlled to hold the electrode 142 in a stopped condition, the feed motor 152 is controlled to neither advance nor retract the electrode 142 relative to the feed motor 152. Rather, when controlled to hold the electrode 142 in the stopped condition, the feed motor 152 is controlled to hold the electrode 142 in place relative to the feed motor 152. Changing wire speeds may be used in some welding processes to reduce spatter and/or achieve desired welding results.

The assist motor 136 may operate as an assist motor to pull the electrode 142 from the spool 140 and feed the electrode 142 toward the welding torch 106, while the example feed motor 152 advances the electrode 142 and/or holds the electrode 142 in a stopped condition to control short circuiting and/or arc length during welding. In examples, either or both the feed motor 152 and/or the assist motor 136 are not capable of retracting the electrode 142. In other examples, either or both of the feed motor 152 and/or the assist motor 136 are capable of retracting the electrode 142. In some examples, the welding torch 106 does not include the feed motor 152. In some examples, the wire feeder 104 does not include the assist motor 136.

The example power supply 102 includes and/or is communicatively coupled to one or more sensors 160. Each of the one or more sensors 160 measure one or more parameters (e.g., an aspects, a quality, a state, etc.) of one or more devices, systems, components, etc. of the system 100 and/or of power (e.g., input power), received by and/or output by the system 100 and/or one or more devices, systems, components, etc. thereof.

In the example of FIG. 1, the one or more sensors 160 include a voltage sensor 162. The voltage sensor 162 measures a voltage (e.g., an output voltage from the power supply 102 and/or a voltage from one or more other points and/or components of the weld circuit 111) and generates a voltage sensor signal which includes a measured voltage (e.g., measured in volts ("V")). The voltage sensor 162 provides the voltage sensor signal to the control circuitry 112, e.g., such that the control circuitry 112 may monitor the voltage sensor signal and, thereby, the measured voltage. The output voltage of the power supply 102 may be controlled by the power conversion circuitry 110, an external voltage source, an external current source, and/or load, and/or any other internal or external cause of voltage. The voltage sensor 162 may include, e.g., a voltmeter, a feedback loop, etc. While the example of the voltage sensor 162 is illustrated in FIG. 1 as monitoring output voltage flowing through the one or more first power supply terminals 102A, the voltage sensor 162 may be electrically coupled to and/or configured to monitor voltage of any welding power flowing from any, some, or all of the terminals 102A, 102B, 104A, 104B and/or one or more other terminals of the weld circuit 111.

In the example of FIG. 1, the one or more sensors 160 include a wire feed speed sensor 163. The wire feed speed sensor 163 measures a wire feed speed (e.g., a speed at which the wire feeder 104 feeds the electrode 142 to the welding torch 106) and generates a wire feed speed sensor signal which includes a measured wire feed speed (measured in, e.g., inches per minute ("ipm"), meters per second ("mps"), etc.). The wire feed speed sensor 163 provides the wire feed speed sensor signal to the control circuitry 112, e.g., such that the control circuitry 112 may monitor the wire feed speed sensor signal and, thereby, the measured wire feed speed. The wire feed speed of the wire feeder 104 may be controlled by the feed motor 152 and/or assist motor 136. The wire feed speed sensor 163 may include, e.g., a photoelectric speed sensor, a tachometer, an encoder, etc. While the example of the wire feed speed sensor 163 is illustrated in FIG. 1 as monitoring the wire feed speed from the assist motor 136, the wire feed speed sensor 163 may be configured to monitor the wire feed speed at the feed motor 152 and/or at any point along the electrode 142 and/or portion of the electrode 142.

In the example of FIG. 1, the one or more sensors 160 include a current sensor 164. The current sensor 164 measures a current (e.g., an output current from the power supply 102 and/or a current from one or more other points and/or components of the weld circuit 111) and generates a current sensor signal which includes a measured current (e.g., measured in amps ("A")). The current sensor 164 provides the current sensor signal to the control circuitry 112, e.g., such that the control circuitry 112 may monitor the current sensor signal and, thereby, the measured current. The output current of the power supply 102 may be controlled by the power conversion circuitry 110, an external voltage source, current source, and/or load, and/or any other internal or external cause of current. The current sensor 164 may include, e.g., an ammeter, a feedback loop, etc. While the example of the current sensor 164 is illustrated in FIG. 1 as monitoring output current of welding power flowing through the one or more first power supply terminals 102A, the current sensor 164 may be electrically coupled to and/or configured to monitor current of any welding power flowing through any, some, or all of the terminals 102A, 102B, 104A, 104B and/or one or more other terminals of the weld circuit 111.

In some examples, the one or more sensors 160 include any, some, or all of the sensors 162, 163, 164. In some examples, the one or more sensors 160 additionally and/or alternatively include one or more other sensors, such as a power source sensor, an audio sensor, a spectrometer, and/or one or more other weld circuit sensors.

The control circuitry 112 may control one or more components, devices, systems, etc. of the system 100 (e.g., the power conversion circuitry 110, the wire feeder 104, and/or the welding torch 106) according to one or more welding parameters. As used herein, the term "welding parameter" includes any measurable, modifiable, configurable, or otherwise controllable aspect, output, or process of a welding system during one or more time intervals of some or all of a welding operation (e.g., a GMAW/MIG operation, a GMAW-P/pulsed MIG operation, an SMAW/stick welding operation, a current-controlled welding operation, an enthalpy-controlled welding operation, a power-controlled welding operation, a resistance-controlled welding operation, a voltage-controlled welding operation, a TIG/GTAW welding operation, an FCAW operation, a plasma cutting operation, a plasma welding operation, a spray welding operation, a short circuit transfer welding operation, a pulse welding operation, a pulsed spray welding operation, and/or one or more other welding modes).

For example, the term "welding parameter" can include one or more voltages (measured in, e.g., volts ("V")) of a weld circuit and/or of welding power output by power conversion circuitry (e.g., a target voltage, a measured voltage, a determined voltage, an output voltage, etc.), one or more currents (measured in, e.g., amps ("A")) of a weld circuit and/or of welding power output by power conversion circuitry (e.g., a target current, a measured current, a determined current, an output current, etc.), one or more frequencies (measured in, e.g., hertz ("Hz")) of a weld circuit and/or of welding power output by power conversion circuitry (e.g., a target frequency, a measured frequency, a determined frequency, an output frequency, etc.), one or more powers (measured in, e.g., watts ("W")) of a weld circuit and/or of welding power output by power conversion circuitry (e.g., a target power, a measured power, a determined power, an output power, etc.), one or more resistances (measured in, e.g., ohms) of a weld circuit (e.g., a target resistance, a measured resistance, a determined resistance, etc.), one or more enthalpies (measured in, e.g., Joules ("J")) of a weld circuit and/or of welding power output by power conversion circuitry (e.g., a target enthalpy, a measured enthalpy, a determined enthalpy, an output enthalpy, etc.), one or more wire feed speeds (measured in, e.g., meters per second ("mps"), inches per minute ("ipm"), etc.) of a wire feeder (e.g., a target wire feed speed, a measured wire feed speed, an output wire feed speed, etc.), a ramping up rate (e.g., a rate at which a voltage, current, power, resistance, enthalpy, etc. is increased from one value to a target value and/or to a setpoint value) of welding power output by power conversion circuitry, a ramping down rate (e.g., a rate at which a voltage, current, power, resistance, enthalpy, etc. is decreased from one value to a target value and/or to a setpoint value) of welding power output by power conversion circuitry, one or more other measurable electric and/or electromagnetic aspects of a weld circuit or welding power output by power conversion circuitry, one or more short circuit durations of one or more short circuits of a weld circuit (e.g., a measured short circuit duration, a predetermined short circuit duration, a target short circuit duration, a determined short circuit duration, etc.), one or more arc lengths of a welding arc of a weld circuit (e.g., a measured arc length, a predetermined arc length, a target arc length, a determined arc length, etc.), one more welding waveforms, one more welding waveforms, one or more durations of a phase of a waveform, one or more durations of one or more other portions of a waveform (e.g., a wavelength of a welding waveform, one or more durations of one or more intervals and/or portions of a welding waveform, etc.), one or more waveform frequencies (e.g., a number of one or more intervals and/or portions of a welding waveform that occur in a set amount of time, etc.), one or more operating modes of power conversion circuitry (e.g., a voltage-controlled mode, a current-controlled mode, a power-controlled mode, a resistance-controlled mode, an enthalpy-controlled mode, etc.), one or more pulse parameters of one or more pulse cycles, and/or one or more other measurable, modifiable, configurable, or otherwise controllable aspects, outputs, and/or processes of a welding system (e.g., the system 100).

During one or more portions of a welding operation, a target welding parameter of a welding parameter-controlled mode (e.g., a target voltage of a voltage-controlled mode) may be modified by being "ramped" according to a "ramping rate." A "ramp rate," as the term is used herein, is a rate at which a target welding parameter of a welding parameter-controlled mode changes (e.g., increases or decreases) from a first target value (e.g., a background voltage) to a second target value (e.g., a peak voltage). Accordingly, a "non-ramping portion," as the term is used herein, refers to a portion of a welding operation wherein a target welding parameter of a welding parameter-controlled mode is held at a constant value. That is to say, while a measured value of the welding parameter of the welding parameter-controlled mode may change during a non-ramping period (e.g., due to variances in CTWD), a target welding parameter of the welding parameter-controlled mode remains unchanged.

As used herein, the term "pulse parameter" includes one or more welding parameters of one or more pulse cycles (e.g., one or more pulse cycles according to which the control circuitry 112 controls the power conversion circuitry 110 to output welding power) of a welding operation (e.g., a pulsed welding operation, a GMAW/MIG operation, a GMAW-P/pulsed MIG operation, a pulsed spray welding operation, and/or one or more other welding modes). For example, the term "pulse parameter" can include one or more pulse widths (e.g., a duration of a peak phase of a pulse cycle), one or more pulse frequencies (e.g., a number of pulses occurring in a set amount of time), one or more target peak voltages (e.g., a target voltage of at least a portion of a peak phase of a pulse cycle), one or more target background voltages (e.g., a target voltage of at least a portion of a background phase of a pulse cycle), one or more other target voltages (e.g., one or more target voltages of one or more phases of a pulse cycle), one or more target peak currents (e.g., a target current of at least a portion of a peak phase of a pulse cycle), one or more target background currents (e.g., a target current of at least a portion of a background phase of a pulse cycle), one or more other target currents (e.g., one or more target currents of one or more phases of a pulse cycle), one or more ramping up rates (e.g., a ramping up rate of a beginning of a peak phase as a welding parameter is controlled to increase from a target background value to a target peak value), one or more ramping down rates (e.g., a ramping down rate of a beginning of a background phase as a welding parameter is controlled to decrease from a target peak value to a target background value), one or more target powers (e.g., a peak power, a background power, etc.), one or more target resistances (e.g., a peak resistance, a background resistance, etc.), one or more target enthalpies (e.g., a peak enthalpy, a background enthalpy, etc.), one or more other target values (e.g., any measurable value of a weld circuit, of welding power output by power conversion circuitry, and/or of a welding operation), and/or one or more other measurable and/or modifiable aspects, processes, and/or values of one or more pulse cycles.

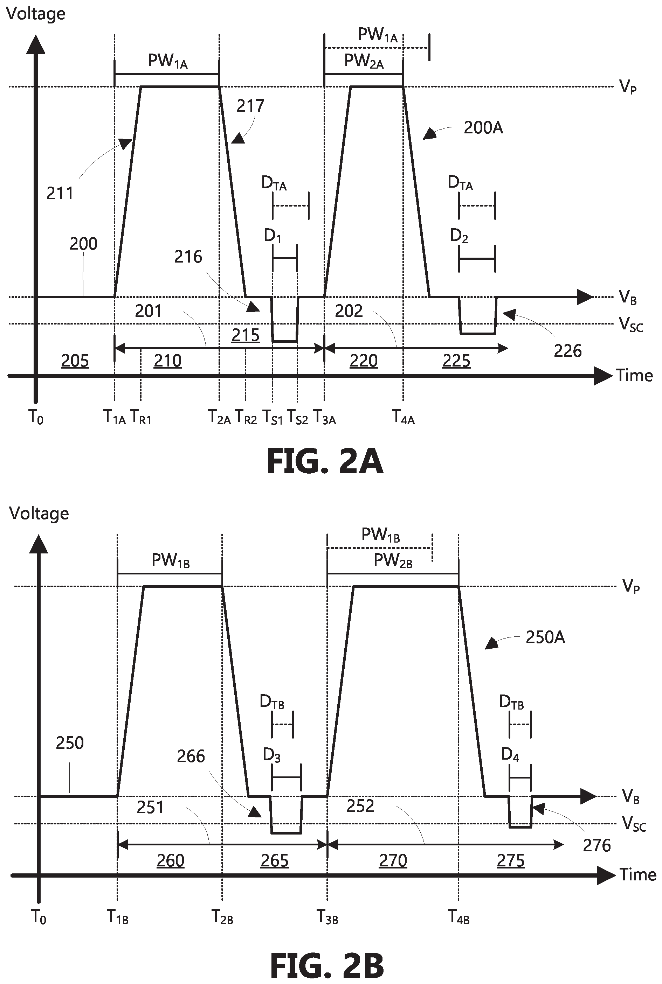

FIGS. 2A and 2B depicts graphs (x-axis: time; y-axis: voltage) of an example of a waveform 200A of a voltage 200 (e.g., a target voltage commanded by the control circuitry 112, a measured voltage measured by the voltage sensor 162, etc.) and an example of a waveform 250A of a voltage 250 of the system 100 (e.g., a target voltage commanded by the control circuitry 112, a measured voltage measured by the voltage sensor 162, etc.) during example pulse cycles. The waveforms 200A, 250A are depicted in FIGS. 2A and 2B as including substantially constant values and substantially constant rates of change during some time intervals, but such depictions are for illustrative purposes only. In some examples, a current and/or voltage (e.g., measured by either or both of the sensors 162, 164) may vary during one or more time intervals in one or more ways not depicted in and/or indicated by FIG. 2A and/or FIG. 2B. For example, relative proportions of voltage levels (e.g., target peak voltages, target background voltages, voltage levels of short circuits, voltage levels of anomalous cathode events, etc.), voltage rates of change (e.g. one or more ramping up rates, one or more ramping down rates, one or more rates of change to or from voltage levels of a short circuit, etc.), or durations (e.g., durations of one or more peak phases, durations of one or more background phases, durations of one or more short circuits, etc.) depicted in FIG. 2A and/or FIG. 2B are purely illustrative and may, in various embodiments, vary from the relative proportions depicted in FIG. 2A and/or FIG. 2B.

In FIG. 2A, a first pulse cycle 201 starts at a first time (T_{1A}) and ends at a third time (T_{3A}). The first pulse cycle 201 is followed by a second pulse cycle 202 that starts at the third time (T_{3A}). The first pulse cycle 201 includes a first peak phase 210, from the first time (T_{1A}) to a second time (T_{2A}), and a first background phase 215, from the second time (T_{2A}) to the third time (T_{3A}). The second pulse cycle 202 includes a second peak phase 220, from the third time (T_{3A}) to a fourth time (T_{4A}), and a second background phase 225, starting at a fourth time (T_{4A}). Each of the peak phases 210, 220 are defined by a pulse width indicated, in the first peak phase 210, by a first pulse width (PW_{1A}) and, in the second peak phase 220, by a second pulse width (PW_{2A}). Each of the peak phases 210, 220 are defined by a target peak voltage, indicated by a peak voltage (V_{P}) (e.g., a target voltage of the peak phases 210, 220). Each of the background phases 215, 225 are defined by a background phase duration and a target background voltage, indicated by a background voltage (V_{B}) (e.g., a target voltage of the background phases 215, 225).

In FIG. 2B, a first pulse cycle 251 starts at a first time (T_{1B}) and ends at a third time (T_{3B}). The first pulse cycle 251 is followed by a second pulse cycle 252 that starts at the third time (T_{3B}). The first pulse cycle 251 includes a first peak phase 260, from the first time (T_{1B}) to a second time (T_{2B}), and a first background phase 265, from the second time (T_{2B}) to the third time (T_{3B}). The second pulse cycle 252 includes a second peak phase 270, from the third time (T_{3B}) to a fourth time (T_{4B}), and a second background phase 275, starting at a fourth time (T_{4B}). Each of the peak phases 260, 270 are defined by a pulse width indicated, in the first peak phase 260, by a first pulse width (PW_{1B}) and, in the second peak phase 270, by a second pulse width (PW_{2B}). Each of the peak phases 260, 270 are defined by a target peak voltage, indicated by a peak voltage (V_{P}) (e.g., a target voltage of the peak phases 260, 270). Each of the background phases 265, 275 are defined by a background phase duration and a target background voltage, indicated by a background voltage (V_{B}) (e.g., a target voltage of the background phases 265, 275).

Referring to FIG. 2A, and with reference to FIG. 1, in some examples, the control circuitry 112 may determine whether a short circuit event (e.g., a molten ball briefly joining the electrode 142 and the workpiece 146) has occurred in one or more ways. In some examples, the control circuitry 112 monitors one or more sensor signals (e.g., a sensor signal generated by the voltage sensor 162) to determine whether a short circuit event has occurred by detecting that a measured voltage is less than a short circuit detection voltage threshold (V_{SC}). The short circuit detection voltage threshold (V_{SC}) may be a predetermined voltage level that is, e.g., less than the background voltage (V_{B}).

For example, the control circuitry 112 determines that a first short circuit event 216 has occurred by detecting the voltage 200 as being less than the short circuit detection voltage threshold (V_{SC}) during the first background phase 215. In the example of FIG. 2A, the control circuitry 112 determines a short circuit duration of the first short circuit event 216 as being an amount of time between a short circuit start time (T_{S1}) and a short circuit end time (T_{S2}) determined by the control circuitry 112. In some examples, the control circuitry 112 may determine the short circuit start time (T_{S1}) as being a time at which the voltage 200 is first measured as being less than the short circuit detection voltage threshold (V_{SC}). In some examples, the control circuitry 112 may determine the short circuit end time (T_{S2}) as being a time at which the voltage 200 returns to the background voltage (V_{B}), returns to being within a predetermined proximity (e.g., a percentage, a number of volts, etc.) of the background voltage (V_{B}), and/or returns to being greater than the short circuit detection voltage threshold (V_{SC}). In some examples, the short circuit end time (T_{S2}) is detected when the voltage 200 has exceeded the short circuit detection threshold (V_{SC}) and/or one or more other voltage thresholds for at least a threshold time duration or threshold number of samples (e.g., discrete measured voltage values measured by the voltage sensor 162).

In the example of FIG. 2A, in response to detecting the first short circuit event 216, the control circuitry 112 determines a first short circuit duration (D₁) (e.g., an amount of time between the short circuit start time (T_{S1}) and the short circuit end time (T_{S2})). The control circuitry 112 compares the first short circuit duration (D₁) to a first target short circuit duration (D_{TA}). In response to identifying that the first short circuit duration (D₁) is less than the first target short circuit duration (D_{TA}) (e.g., indicating that an arc length of a welding arc of the weld circuit 111 is greater than a target arc length), the control circuitry 112 decreases a pulse width of the voltage 200 by determining the second pulse width (PW_{2A}) of the second peak phase 220, which is less than the first pulse width (PW_{1A}) of the first peak phase 210. By decreasing the pulse width from the first pulse width (PW_{1A}) to the second pulse width (PW_{2A}), the control circuitry 112 may increase a short circuit duration of a subsequent short circuit relative to the first short circuit duration (D₁) (e.g., indicating that the arc length of the welding arc of the weld circuit 111 has increased).

For example, in the second background phase 225, decreasing the pulse width from the first pulse width (PW_{1A}) to the second pulse width (PW_{2A}) can be seen to result in a second short circuit duration (D₂) of a second short circuit event 226 that is greater than the first short circuit duration (D,) and, in the example of FIG. 2A, equal to the first target short circuit duration (D_{TA}). In some examples, in response to identifying that the first short circuit duration (D₁) is less than the first target short circuit duration (D_{TA}), the control circuitry 112 additionally and/or alternatively controls and/or modifies one or more other welding parameters and/or pulse parameters. For example, in response to identifying that a short circuit duration is less than a target short circuit duration, the control circuitry 112 may decrease a target peak voltage, decrease one or more other target voltages, decrease a target peak current, decrease one or more other target currents, decrease a waveform frequency, decrease a pulse frequency, modify one or more durations of one or phases of a waveform, modify one or more durations of one or more portions of a waveform, decrease a pulse width, decrease a ramping up rate (e.g., of a peak phase), increase a ramping down rate (e.g., of a background phase), and/or modify one or more other welding parameters.

In the example of FIG. 2B, in response to detecting a third short circuit event 266, the control circuitry 112 determines a third short circuit duration (D₃). The control circuitry 112 compares the third short circuit duration (D₃) to a second target short circuit duration (D_{TB}). In response to identifying that the third short circuit duration (D₃) is greater than the second target short circuit duration (D_{TB}) (e.g., indicating that an arc length of a welding arc of the weld circuit 111 is less than a target arc length), the control circuitry 112 increases a pulse width of the voltage 200 by determining the second pulse width (PW_{2B}) of the second peak phase 270, which is greater than the first pulse width (PW_{1A}) of the first peak phase 260. By increasing the pulse width from the first pulse width (PW_{1B}) to the second pulse width (PW_{2B}), the control circuitry 112 may decrease a short circuit duration of a subsequent short circuit relative to the third short circuit duration (D₃) (e.g., indicating that the arc length of the welding arc of the weld circuit 111 has decreased).

For example, in the second background phase 275, increasing the pulse width from the first pulse width (PW_{1A}) to the second pulse width (PW_{2B}) can be seen to result in a fourth short circuit duration (D₄) of a fourth short circuit 276 that is less than the third short circuit duration (D₃) and, in the example of FIG. 2B, equal to the second target short circuit duration (D_{TB}). In some examples, in response to identifying that the third short circuit duration (D₃) is greater than the second target short circuit duration (D_{TB}), the control circuitry 112 additionally and/or alternatively controls and/or modifies one or more other welding parameters and/or pulse parameters. For example, in response to identifying that a short circuit duration is greater than a target short circuit duration, the control circuitry 112 may increase a target peak voltage, increase one or more other target voltages, increase a target peak current, increase one or more other target currents, increase a waveform frequency, increase a pulse frequency, modify one or more durations of one or more phases of a waveform, modify one or more durations of one or more portions of a waveform, increase a pulse width, increase a ramping up rate (e.g., of a peak phase), decrease a ramping down rate (e.g., of a background phase), and/or modify one or more other welding parameters.

In some examples, the control circuitry 112 may additionally and/or alternatively determine whether a short circuit event has occurred by comparing one or more measurements of one or more other parameters (e.g., one or more parameters in addition to and/or alternative to voltage) to one or more other short circuit detection thresholds. In some examples, the control circuitry 112 may determine a determined voltage (based on, e.g., a current measured by the current sensor 164) rather than measure a measured voltage, and, in some such examples, the control circuitry 112 may compare the determined voltage to the short circuit detection voltage threshold (V_{SC}). In some examples, the short circuit detection voltage threshold (V_{SC}) may be a predetermined value (e.g., a setpoint), a value received via the communications circuitry 118, and/or a value received via the user interface 114. In some examples, the control circuitry 112 may determine the short circuit detection voltage threshold (V_{SC}) based on one or more welding parameters of the welding power, such as by calculating the short circuit detection voltage threshold (V_{SC}) as a percentage of the background voltage (V_{B}), as a percentage of the peak voltage (V_{B}), as a predetermined amount less than the background voltage (V_{B}), and/or as a predetermined amount less than the peak voltage (V_{P}).

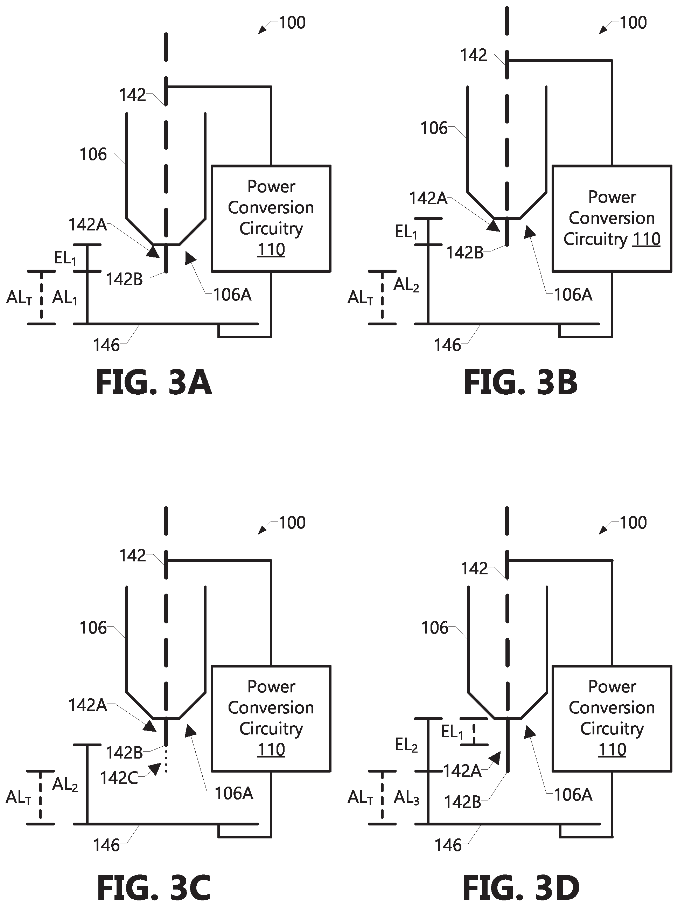

FIGS. 3A-3D depict the welding torch 106 and the electrode 142 of FIG. 1 more closely to illustrate an example of modifying one or more welding parameters to control an arc length. In FIGS. 3A-3D, an electrode extension 142A of the electrode 142 is a portion of the electrode 142 which extends beyond a contact tip 106A of the welding torch 106. In the example of FIG. 3A, the electrode extension 142A has a first electrode extension length (EL,) (e.g., a length of the electrode 142 between the contact tip 106A and an electrode tip 142B of the electrode extension 142A). In the example of FIG. 3A, the position of the contact tip 106A relative to the workpiece 146 and the first electrode extension length (EL,) provide a first arc length (AL,) (e.g., a distance between the electrode tip 142B of the electrode extension 142A and the workpiece 146) equal to a target arc length (AL_{T}) (e.g., a selected, determined, calculated, ideal, and/or desired value or range of values of arc lengths of the system 100).

In the example of FIG. 3B, however, the contact tip 106A has moved further from the workpiece 146 than in the example of FIG. 3A, while the first electrode extension length (EL,) remains the same. Accordingly, in the example of FIG. 3B, the position of the contact tip 106A relative to the workpiece 146 and the first electrode extension length (EL,) provide a second arc length (AL₂) greater than the target arc length (AL_{T}). Because the second arc length (AL₂) is greater than the first arc length (AL,), durations of short circuit events (e.g., following a peak phase of a pulse cycle) between the electrode extension 142A and the workpiece 146 generally shorten in duration, as molten metal being transferred from the electrode extension 142A to the workpiece 146 joins each together for shorter periods of time. For example, surface tension of the molten metal can keep the electrode extension 142A and the workpiece 146 connected. However, as the arc length lengthens, the surface tension of the molten metal may become more stressed while connecting the electrode extension 142A and the workpiece 146 and, thereby, reducing an amount of time the electrode extension 142A is connected to the workpiece 146 (e.g., a short circuit duration). Accordingly, shorter short circuit durations can indicate longer arc lengths, and longer short circuit durations can indicate shorter arc lengths. By selecting, determining, or otherwise utilizing a target short circuit duration corresponding to a target arc length, measured short circuit durations may be compared to the target short circuit duration as a proxy for measuring arc length.

In the example of FIG. 3C, the control circuitry 112, based on one or more short circuit durations of one or more short circuit events between the electrode extension 142A and the workpiece 146, determines one or more welding parameters configured to elongate the electrode extension 142A by an additional length 142C. For example, and with reference to FIG. 2A, the control circuitry 112 may decrease a pulse width from the first pulse width (PW1A) to the second pulse width (PW_{2A}) to elongate the electrode extension 142A.

In some examples, by decreasing a target voltage (e.g., peak voltage), decreasing a target current (e.g., peak current), decreasing a waveform frequency (e.g., pulse frequency), modifying a duration of a portion of a waveform (e.g., decreasing pulse width), decreasing a ramping up rate (e.g., of a peak phase), and/or increasing a ramping down rate (e.g., of a background phase) while maintaining a substantially constant wire feed speed, the length of the electrode extension 142A can be increased by decreasing a rate at which the electrode 142 melts, thereby providing a greater amount of time for the electrode 142 to travel beyond the contact tip 106A prior to melting into the workpiece 146. Conversely, by, e.g., increasing a target voltage (e.g., peak voltage), increasing a target current (e.g., peak current), increasing a waveform frequency (e.g., pulse frequency), modifying a duration of a portion of a waveform (e.g., increasing a pulse width), increasing a ramping up rate (e.g., of a peak phase), and/or decreasing a ramping down rate (e.g., of a background phase) while maintaining a substantially constant wire feed speed, the length of the electrode extension 142A can be decreased by increasing a rate at which the electrode 142 melts.

Accordingly, by comparing the duration of a measured short circuit duration to a target short circuit duration, the control circuitry 112 can determine that the second arc length (AL₂) is unequal to the target arc length (AL_{T}) and, based on a difference between the measured short circuit duration and target short circuit duration, determine one or more welding parameters to modify to adjust the arc length closer to the target arc length (AL_{T}) and an amount by which each of the one or more welding parameters should be modified.

In the example of FIG. 3D, the control circuitry 112 has modified one or more welding parameters (e.g., by decreasing a pulse width) to slow a rate of melting of the electrode 142. Accordingly, the electrode extension 142A now defines a second electrode extension length (EL₂) longer than the first electrode extension length (EL,) of FIGS. 3A-3C. By increasing the length of the electrode extension 142A, the electrode tip 142B of the electrode extension 142A and the workpiece 146 now define a third arc length (AL₃) equal to the target arc length (AL_{T}), even though the contact tip 106A is positioned the same distance from the workpiece 146 as in FIGS. 3B and 3C.

Through processes such as those depicted in and described with respect to FIGS. 2A-3D, the control circuitry 112 may control and/or maintain an arc length of a welding arc of the system 100 based on measured short circuit durations of short circuits between the electrode 142 and the workpiece 146. Such processes enable the control circuitry 1 12 to reduce variations in the arc length of the system 100 even as a distance between the contact tip 106A and the workpiece 146 varies.

In some examples, the control circuitry 112 determines arc voltage, electrode extension voltage, and/or CTW voltage based on one or more relationships between two or more current/voltage levels measured or determined during the ordinary course of a welding operation by measuring such current/voltage levels (e.g., output current/voltage levels) during an arc length-controlled period of the welding operation.

As used herein, the term "arc voltage" (e.g., of a weld circuit) refers to a voltage of a welding arc of a weld circuit. For example, an arc voltage of the weld circuit 111 is a voltage of a welding arc between the electrode tip 142B and the workpiece 146.

As used herein, the term "electrode extension voltage" (e.g., of a weld circuit) refers to a voltage of an electrode extension of an electrode (e.g., a portion of the electrode 142). For example, an electrode extension voltage of the weld circuit 111 is a voltage across the entirety of the electrode extension 142A.

As used herein, the term "contact tip-to-work voltage" (e.g., of a weld circuit) refers to a voltage between a contact tip and a workpiece. For example, a contact tip-to-work ("CTW") voltage of the weld circuit 111 is a voltage between the workpiece 146 and the contact tip 106A of the welding torch 106. Accordingly, a CTW voltage of a weld circuit may be a sum of an electrode extension voltage of the weld circuit and an arc voltage of the weld circuit.

As used herein, the term "arc length-controlled period" refers to one or more portions of a welding operation wherein one or more welding parameters are controlled (e.g., according to one or more processes described herein with respect to FIGS. 2A-3D) in an arc length-controlled mode according to a target arc length (e.g., the target arc length (AL_{T}) of FIGS. 3A-3D, a single value, a range of values, etc.) and/or a proxy for a target arc length, such as a target short circuit parameter (e.g., either or both of the target short circuit durations (D_{TA}, D_{TB}) of FIGS. 2A and 2B). In some examples, an arc length-controlled period is a continuous (e.g., non-interrupted) portion of a welding operation. In some examples, an arc length-controlled period comprises a plurality of discontinuous (e.g., separated by one or more interruptions) portions of a welding operation wherein one or more welding parameters are controlled in an arc length-controlled mode according to the same target arc length.

In some examples, the control circuitry 112 determines an arc voltage, a CTW voltage, and/or an electrode extension voltage of the weld circuit 111 based on a determination (e.g., a predetermined presumption) that an arc length of a welding arc of the weld circuit 111 exhibits substantially no deviation (e.g., changing within a predetermined margin of error) during an arc length-controlled period of a welding operation and, thereby between differing current/voltage levels determined during the arc length-controlled mode. Because, during a welding operation, arc voltage may remain substantially constant (e.g., even as output current changes) if arc length also remains substantially constant, the control circuitry 112 may thereby determine that arc voltage remains substantially constant between two or more current/voltage levels determined during an arc length controlled period (e.g., the periods depicted in FIGS. 2A and 2B).

In some examples, the control circuitry 112 determines a non-arc voltage (V_{NA}) of the weld circuit 111 based on a non-arc impedance (Z_{NA}) of the weld circuit 111 (e.g., a sum amount of non-arc resistance of the weld circuit 111 and/or a function of all non-arc capacitance, resistance, and/or inductance of the weld circuit 111), a current (I_{O}) of the weld circuit 111 (e.g., an output current or another current determined and/or received by the control circuitry 112), and a non-arc voltage equation (1): ${V}_{NA} = {I}_{O} ∗ {Z}_{NA}$ (1)

The control circuitry 112 may presume that a total voltage of the weld circuit 111 is a sum of an arc voltage and a non-arc voltage of the weld circuit 111. Accordingly, in some examples, the control circuitry 112 determines an arc voltage (V_{A}) of the weld circuit 111 based on a voltage (V_{O}) of the weld circuit 111 (e.g., an output voltage or another voltage determined and/or received by the control circuitry 112), a non-arc voltage (V_{NA}) of the weld circuit 111, and a total voltage relationship equation (2): ${V}_{A} = {V}_{O} - {V}_{NA}$ (2)

The non-arc voltage (V_{NA}) of the total voltage relationship equation (2) may be combined algebraically with the non-arc voltage equation (1). Accordingly, the control circuitry 112 may determine an arc voltage (V_{A}) of the weld circuit 111 based on a voltage (V_{O}) of the weld circuit 111 (e.g., an output voltage or another voltage determined and/or received by the control circuitry 112), a current (I_{O}) of the weld circuit 111 (e.g., an output current or another current determined and/or received by the control circuitry 112), a non-arc impedance (Z_{NA}) of the weld circuit 111, and an arc voltage/non-arc impedance relationship equation (3): ${V}_{A} = {V}_{O} - \left({I}_{O}∗{Z}_{NA}\right)$ (3)

Using the arc voltage/non-arc impedance relationship equation (3), the control circuitry may determine the arc voltage (V_{A}) based on one or more current/voltage levels (e.g., an output current/voltage level) if the control circuitry 112 first determines the non-arc impedance (Z_{NA}) of the weld circuit 111 (e.g., by measuring, calculating, and/or receiving the non-arc impedance (Z_{NA})). For conventional welding systems, it is difficult or impractical to directly measure the non-arc impedance of a weld circuit or determine the non-arc impedance of the weld circuit before beginning a welding operation. However, by reducing and/or substantially eliminating deviations in arc voltage, the control circuitry 112 may determine a non-arc impedance of the weld circuit 111 by comparing two or more voltage/current levels associated with the arc length-controlled period.

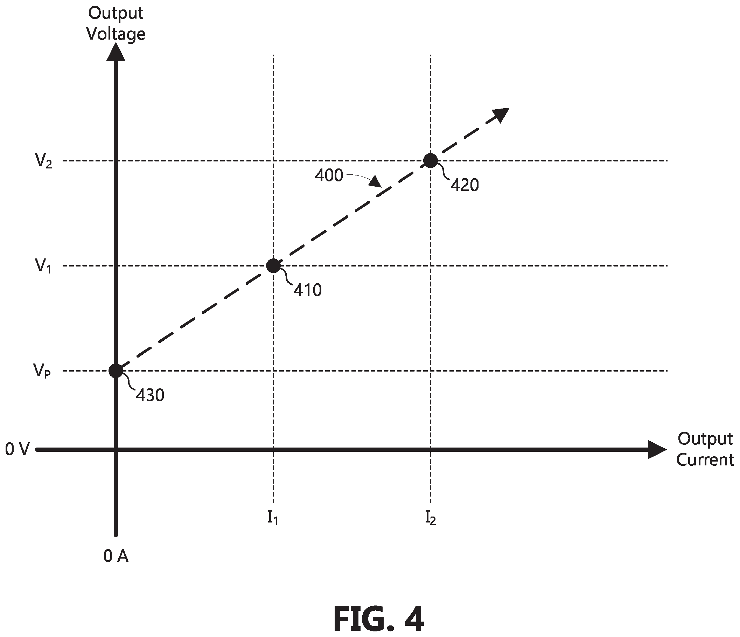

Referring now to FIG. 4, and with reference to FIG. 1, the control circuitry 112 may determine a non-arc impedance , an arc voltage, an electrode extension voltage, and/or a CTW voltage of the weld circuit 111 based on a first output current/voltage level 410 and a second output voltage/current level 420. The first output current/voltage level 410 is defined by a first output current (I_{O1}) (e.g., a measured output current, a target output current, etc.) and a first output voltage (V_{O1}) (e.g., a measured output voltage, a target output voltage, etc.). The second output current/voltage level 420 is defined by a second output current (I_{O2}) (e.g., a measured output current, a target output current, etc.) and a second output voltage (V_{O2}) (e.g., a measured output voltage, a target output voltage, etc.). In some examples, the control circuitry 112 may determine the non-arc impedance (Z_{NA}) of the weld circuit 111 based on any plurality of current/voltage levels.

Each of the output current/voltage levels 410, 420 are associated with (e.g., measured and/or determined during) a single arc length-controlled period of a welding operation. Because the control circuitry 112 controlled the system 100 to operate in an arc length-controlled mode during the arc length-controlled period associated with the current/voltage levels 410, 420, the control circuitry 112 may determine and/or presume that an arc voltage portion of the first output voltage (V_{O1}) is equal to and/or substantially equal to an arc voltage portion of the second output voltage (V_{O2}) (e.g., that each of the output voltages (V_{O1}, V_{O2}) are associated with a constant and/or substantially constant value of the arc voltage (V_{A})). Based on this determination, the control circuitry 112 may determine and/or presume (e.g., based on the non-arc voltage equation (1)) that a rate of change 400 between the first current/voltage level 410 and the second current/voltage level 420 is substantially equal to a non-arc impedance of the weld circuit 111.

A non-arc impedance of the weld circuit 111 may change over time during a welding operation, e.g., due to a length and/or material of one or more components of the weld circuit changing, one or more components being added to and/or removed from the weld circuit, etc. Accordingly, as an amount of time separating the output current/voltage levels 410, 420, an accuracy of a non-arc impedance indicated by the relationship 400 also decreases.

Nonetheless, the control circuitry 112 may determine and/or presume that the non-arc impedance of the weld circuit 111 is constant and/or substantially constant between each of the output current/voltage levels 410, 420 and/or one or more other current/voltage levels due to a brief amount of time separating respective times and/or time periods of such current/voltage levels. As described elsewhere herein, in some examples, a background phase of a pulse cycle has a duration greater than or equal to 1 millisecond ("ms") and less than or equal to 25 ms, and a peak phase of the pulse cycle has a duration greater than or equal to 1 ms and less than or equal to 3 ms. Accordingly, differences in time between an average background current/voltage level of the background phase (e.g., the first output current/voltage level 410) and an average peak current/voltage level of the peak phase (e.g., the second output current/voltage level 420) may differ by a duration of less than or equal to 30 ms (e.g., 25 µs).

In the example of FIG. 4, by determining the non-arc impedance (Z_{NA}) of the weld circuit 111 (i.e., the rate of change 400), the control circuitry 112 determines an arc voltage of the weld circuit 111 by determining an amount of voltage predicted by extrapolating the rate of change 400 to an expected current/voltage level 430 having a current equal to 0. For example, the control circuitry may determine the non-arc impedance (Z_{NA}) of the weld circuit 111 based on the output voltages (V_{O1}, V_{O2}) of the current/voltage levels 410, 420, the output currents (I_{O1}, I_{O2}) of the current/voltage levels 410, 420, and an arc length-controlled non-arc impedance relationship equation (4) (e.g., derived from Ohm's law): ${Z}_{NA} = \frac{{V}_{O 2} - {V}_{O 1}}{{I}_{O 2} - {I}_{O 1}}$ (4)

The non-arc impedance (Z_{NA}) may be replaced algebraically in the arc voltage/ non-arc impedance relationship equation (3) using the arc length-controlled non-arc impedance relationship equation (4) to determine an arc voltage of the weld circuit 111 based on any plurality of current/voltage levels (e.g., using, as inputs, the output current/voltage levels 410, 420). Accordingly, in some examples, the control circuitry 112 determines an arc voltage (V_{A}) of the weld circuit 111 based on a first current/voltage level (e.g., the first output current/voltage level 410) comprising a first voltage (V_{O1}) and a first current (I_{O1}), a second current/voltage level (e.g., the second output current/voltage level 420) comprising a second voltage (V_{O2}) that is greater than the first voltage (V_{O1}) and a second current (I_{O2}) that is greater than the first current (I_{O1}), a reference output current/voltage level comprising a reference output voltage (V_{Or}) (e.g., either of the output voltages (V_{O1}, V_{O2})) and a reference output current (I_{OR}) (e.g., either of the output currents (I_{O1}, I_{O2})), and an expanded arc length-controlled arc voltage relationship equation (5): ${V}_{A} = {V}_{Or} - {I}_{Or} ∗ \left(\frac{{V}_{O 2} - {V}_{O 1}}{{I}_{O 2} - {I}_{O 1}}\right)$ (5)

Accordingly, the control circuitry 112 may determine the arc voltage (V_{A}) of the weld circuit 111 based on only two current/voltage levels (e.g., the output current/voltage levels 410, 420) and the expanded arc length-controlled arc voltage relationship equation (5). In some examples, the control circuitry 112 determines the arc voltage (V_{A}) of the weld circuit 111 based on any plurality of current/voltage levels and the expanded arc length-controlled arc voltage relationship equation (5) (e.g., by reiterating either or both of the relationship equations (3, 5) one or more times using any plurality of current/voltage levels and averaging the outputs).

In some examples, in addition to and/or alternatively to determining an arc voltage, the control circuitry 112 may determine an electrode extension voltage (e.g., a voltage across the electrode extension 142A of the electrode 142, as depicted in FIGS. 3A-3D) and/or a contact tip-to-work ("CTW") voltage (e.g., a voltage between the workpiece 146 and the contact tip 106A of the welding torch 106, as depicted in FIGS. 3A-3D) of the system 100. The control circuitry 112 may determine an arc voltage and an electrode extension voltage of the system 100 based on one or more welding parameters and, based on the arc voltage and electrode extension voltage, calculates a CTW voltage (e.g., as a summation of the arc voltage and the electrode extension voltage). Such calculations may be based on any, some, or all of a wire feed speed of the wire feeder 102, an average current of the weld circuit 111, and/or one or more electrode characteristics of the electrode 142.

In some examples, electrode characteristics may include one or more aspects of a size, shape, or composition of the electrode 142, such as a radius, diameter, or area of the electrode 142, one or more materials from which the electrode 142 is formed, a conductivity or resistivity of the electrode 142, a melting temperature of the electrode 142, a specific heat of the electrode 142, a predicted or measured temperature of the electrode 142, and/or one or more other characteristics of the electrode 142 which may indicate a size, conductivity, and/or resistivity of the electrode extension 142A. The control circuitry 112 may determine an average current (e.g., a moving average) based on two or more measured or determined currents and by using, e.g., an averaging function, a weighted averaging function, and/or one or more other functions. In some examples, the control circuitry 112 calculates an average current based on any, some, or all of one or more current measurements of some or all of a phase (e.g., one or more non-ramping portions of one or more phases), one or more current measurements of one or more phases, and/or one or more current measurements of one or more other periods of a waveform. In some examples, an average current is calculated based on one or more other predetermined formulae or criteria.

In some examples, the control circuitry 112 determines an electrode extension voltage based on one or more predetermined relationships between wire feed speed, average current, and contact tip-to-work distance ("CTWD"). Accordingly, by using, as inputs, wire feed speed, average current, and one or more electrode characteristics, one or more predetermined relationships may be used to determine a CTWD of the system 100 and, based on the CTWD, an electrode extension voltage of the electrode extension 142A. For example, the control circuitry 112 may determine an arc length of a welding arc of the system 100 (based on, e.g., a target arc length of an arc length-controlled mode, one or more short circuit parameters, etc.) and, after determining a CTWD of the system 100 based on a wire feed speed and an average current of the system 100, subtract from the CTWD the arc length, thereby providing an electrode extension length of the electrode extension 142A, from which, based on the average current and one or more characteristics of the electrode (e.g., to determine a total resistance of the electrode extension 142A), an electrode extension voltage may be calculated.

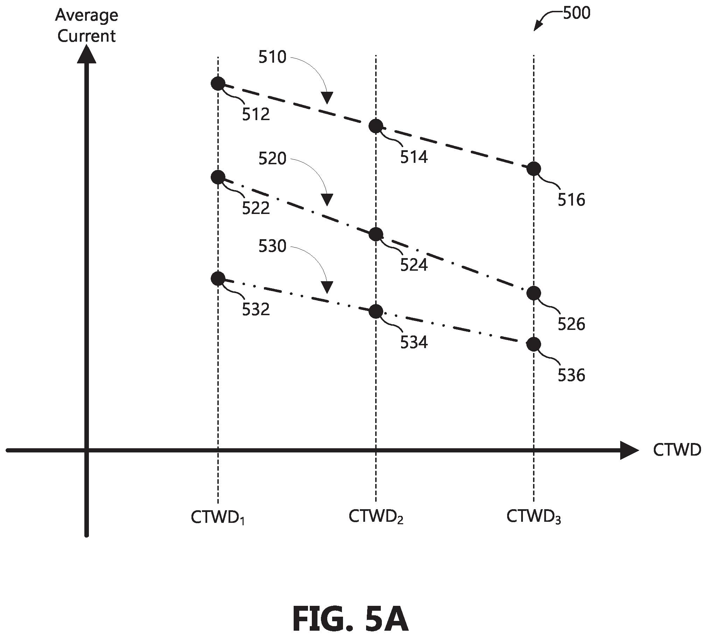

For example, and referring to FIG. 5A, a first dataset 500 (e.g., a lookup table stored on or accessible by the control circuitry 112) may be used to indicate relationships between average current and CTWD for one or more distinct wire feed speeds. In the example of FIG. 5A a first relationship 510 between CTWD and average current is associated with a first wire feed speed (e.g., 500 ipm) and indicates that, e.g., a first average current level 512 is associated with a first CTWD (CTWD,), a second average current level514 is associated with a second CTWD (CTWD₂), and a third average current level 516 is associated with a third CTWD (CTWD₃). As another example, a second relationship 520 between CTWD and average current is associated with a second wire feed speed (e.g., 400 ipm) and indicates that, e.g., a fourth average current level 522 is associated with the first CTWD (CTWD₁), a fifth average current level 524 is associated with the second CTWD (CTWD₂), and a sixth average current level 526 is associated with the third CTWD (CTWD₃). As a third example, a third relationship 530 between CTWD and average current is associated with a third wire feed speed (e.g., 300 ipm) and indicates that, e.g., a seventh average current level 532 is associated with the first CTWD (CTWD₁), an eighth average current level 534 is associated with the second CTWD (CTWD₂), and a ninth average current level 536 is associated with the third CTWD (CTWD₃). Any, some, or all of the current levels 512, 514, 516, 522, 524, 526, 532, 534, 536 may be determined based on either or both of the current/voltage levels 410, 420 and/or one or more other current levels. Any, some, or all of the current levels 512, 514, 516, 522, 524, 526, 532, 534, 536 may be average output currents of the weld circuit 111.

Accordingly, when controlling the system 100 to operate in an arc length-controlled mode, the control circuitry 112 may determine, using an average voltage (e.g., an average output voltage) and a wire feed speed of the wire feeder 104, a CTWD of the weld circuit 111 based on any, some, or all of the relationships 510, 520, 530 and/or one or more other relationships between wire feed speed, average current, and CTWD. Once the CTWD has been determined, an electrode extension length of the electrode extension 142A (e.g., either or both of the electrode extension lengths (EL,, EL₂) of FIGS. 3A-3D) by subtracting an arc length of the weld circuit 111 (e.g., the target arc length of an arc length-controlled mode, an arc length determined based on one or more short circuit parameters, etc.) from the CTWD.

The control circuitry 112 may determine an electrode extension voltage of the electrode extension 142A if a conductivity or resistivity of a material of the electrode 142 and an area of the electrode 142 (e.g., an area of a cross-section of the electrode 142 perpendicular to a length of the electrode 142) are known. Accordingly, the control circuitry 112 may determine an electrode extension voltage (EE_{V}) of the electrode extension 142A based on a non-arc impedance (Z_{NA}) of the weld circuit 111 (e.g., the non-arc impedance (Z_{NA}) determined by the arc length-controlled non-arc impedance relationship equation (4)), an average current (I_{O}) (e.g., any, some, or all of the current levels 512, 514, 516, 522, 524, 526, 532, 534, 536, either or both of the output currents (I_{O1}, I_{O2}) of the arc voltage/ non-arc impedance relationship equation (3), and/or one or more other current levels) an electrode area (A_{E}) of the electrode 142, a resistivity (ρ) of the electrode 142, an electrode extension length (L_{EE}) of the electrode extension 142A, and a CTWD/electrode extension voltage relationship equation (6): ${EE}_{V} = {I}_{0} ∗ \left(\frac{{EE}_{L} ∗ ρ}{{A}_{E}}\right)$ (6)

By adding together the arc voltage (V_{A}) determined based on the expanded arc length-controlled arc voltage relationship equation (5) and the electrode extension voltage (EE_{V}) determined based on the CTWD/electrode extension voltage relationship equation (6), the control circuitry 112 can determine a contact tip-to-work voltage of the weld circuit 111. Accordingly, in some examples, the control circuitry 112 determines an electrode extension voltage and/or a contact tip-to-work voltage of the weld circuit 111 based on at least two current/voltage levels of the weld circuit 111 (e.g., output current/voltage levels used to calculate the arc voltage (V_{A}) based on the expanded arc length-controlled arc voltage relationship equation (5)), an average current of the weld circuit 111 (e.g., either or both of the currents of the two output current/voltage levels used to calculate the arc voltage (V_{A}) based on the expanded arc length-controlled arc voltage relationship equation (5)), a wire feed speed of the wire feeder 104, one or more relationships between wire feed speed, average current, and CTWD (e.g., any, some, or all of the relationships 510, 520, 530), an electrode area of the electrode 142, a conductivity or resistivity of the electrode 142, and an arc length of the weld circuit 111 (e.g., the target arc length of an arc length-controlled mode, an arc length determined based on one or more short circuit parameters, etc.).

However, in some examples, the control circuitry 112 determines an electrode extension voltage or a CTW voltage of the system 100 based only on a wire feed speed of the wire feeder 102, an average current of the weld circuit 111, one or more electrode characteristics of the electrode 142, and one or more predetermined relationships. That is to say, the control circuitry 112 may determine an electrode extension voltage and/or a CTW voltage, e.g., without measuring or determining arc voltage, without measuring output voltage, without measuring or determining a CTWD, and/or without measuring one or more welding parameters (e.g., the average current) while operating in an arc length-controlled mode. For example, the control circuitry 112 may use one or more predetermined relationships between one or more electrode characteristics, wire feed speed, average current, and electrode extension voltage or CTW voltage to determine the electrode extension voltage or CTW voltage. Data may be collected to determine such predetermined relationships for an electrode having certain electrode characteristics by, e.g., directly measuring CTWvoltage or electrode extension voltage (e.g., by directly coupling a voltage sensor to a workpiece and a contact tip in a laboratory setting or other context influenced by relatively few outside variables) and recording voltages of the electrode at differing wire feed speeds and average currents while operating in an arc length controlled mode (e.g., to substantially reduce or eliminate differences in arc length and, thereby, arc voltage between distinct measurements).

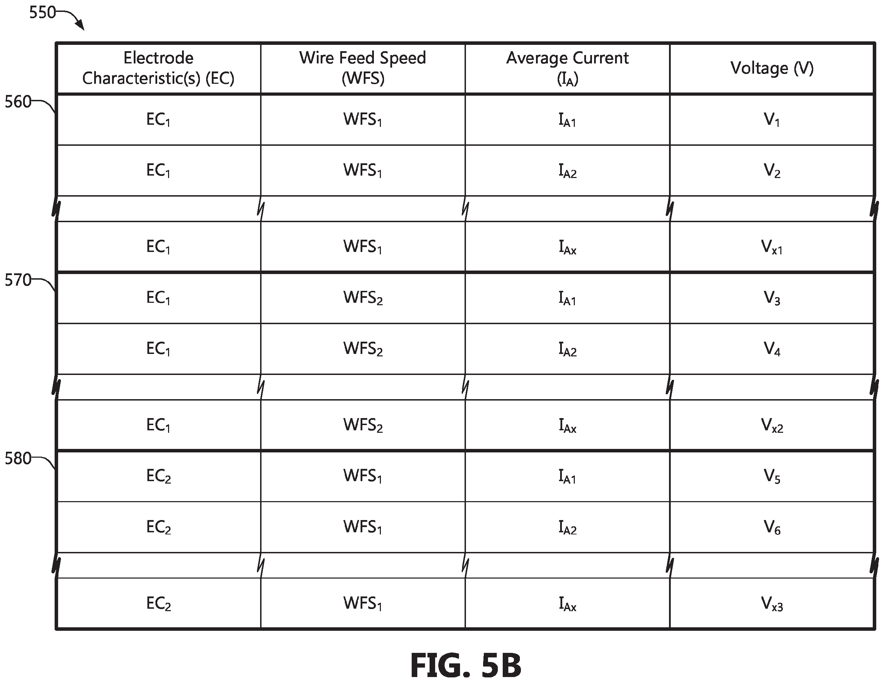

For example, and referring to FIG. 5B, a second dataset 550 (e.g., a lookup table stored on or accessible by the control circuitry 112) may provide a plurality of relationships between one or more electrode characteristics, wire feed speed, average current, and voltage (e.g., CTW voltage or electrode extension voltage). In the example of FIG. 5B, a fourth relationship 560 is associated with one or more first electrode characteristics (EC₁) (e.g., a combination of an electrode area and an electrode resistivity of a particular electrode type) and a first wire feed speed (e.g., 500 ipm), a fifth relationship 570 is associated with the same one or more first electrode characteristics (EC₁) of the fourth relationship 560 and a second wire feed speed (WFS₂) (e.g., 400 ipm), and a sixth relationship 580 is associated with one or more second electrode characteristics (EC₂) (e.g., a differing electrode area and/or a differing electrode resistivity than those of the first electrode characteristics (EC₁)) and the same first wire feed speed as the fourth relationship 560.

Using relationships such as the relationships 560, 570, 580, the control circuitry 112 may determine in real time electrode extension voltage and/or CTW voltage while requiring measuring only average current in realtime. In some examples, before or during a welding operation, the control circuitry 112 determines one or more electrode characteristics of the electrode 142 (e.g., based on one or more inputs into the user interface 114, one or more measurements by the sensors 160, etc.). In some such examples, based on the determined one or more electrode characteristics, the control circuitry 112 may determine a plurality of applicable relationships and changeably select from the plurality of relationships a particular relationship for use at a particular time during a welding operation based on a wire feed speed (e.g., a target wire feed speed) of the wire feeder 104 at that particular time.

For example, in response to determining that the electrode 142 is associated with the one or more first electrode characteristics (EC₁), the control circuitry 112 may select for use the relationships 560, 570 and/or one or more other relationships associated with the one or more first electrode characteristics (EC₁). The control circuitry 112 may, thereby, select a particular one of the relationships associated with the one or more first electrode characteristics (EC₁) based on an initial wire feed speed of the wire feeder 102 (e.g., the first wire feed speed WFS₁). While the wire feeder 102 continues to drive the electrode 142 at the first wire feed speed (WFS₁), the control circuitry 112 may thereby directly determine electrode extension voltage and/or CTW voltage by determining an average current of the weld circuit 111 (e.g., a first average current (I_{A1})) and the voltage (e.g., a first voltage (V1)) which the fourth relationship 560 associates with the average current. Thereafter, a user of the system 100 may decrease the wire feed speed of the wire feeder 102 from the first wire feed speed (WFS₁) to the second wire feed speed (WFS₂). In response to this decrease, the control circuitry 112 may begin determining CTW voltage or electrode extension voltage based on the fifth relationship 570, rather than the fourth relationship 560.

Accordingly, the control circuitry 112 may determine electrode extension voltage and/or CTW voltage from an average current of the weld circuit 111 based on historical data (e.g., the second dataset 550 and/or any, some, or all of the relationships 560, 570, 580) collected while operating in an arc length-controlled mode. In some examples, the control circuitry 112 uses such historical data and/or relationships (e.g., the second dataset 550 and/or any, some, or all of the relationships 560, 570, 580) to determine electrode extension voltage and/or CTW voltage even when the system 100 is not operating in an arc length-controlled mode (e.g., based on an average current calculated based on measured currents not measured during an arc length-controlled period). For example, such data and/or relationships, by being based on historical data with a high level of precision (e.g., due to collection of such historical data while operating in an arc length-controlled mode), may be used by the control circuitry 112 to determine a CTW voltage regardless of whether or not the system 100 is operating in an arc length-controlled mode during measurement of an average current. However, when using average currents not measured during an arc length-controlled period, such historical data and/or relationships (e.g., the second dataset 550 and/or any, some, or all of the relationships 560, 570, 580) may determine CTW voltage with a lower level of accuracy and/or a lower level of precision than when using average currents measured during an arc length controlled period. For example, the same CTWD may be defined by differing arc lengths and electrode extension lengths and, thereby, differing CTW voltages when not operating in an arc length controlled mode, even if average current and wire feed speed are the same across such differing arc lengths and electrode extension lengths.

In some examples, the voltage sensor 162, the current sensor 164, and/or one or more other sensors of the sensors 160 have sampling rates less than or equal to 30 ms/S (e.g., 25 µs/S). Accordingly, two or more current/voltage levels (e.g., the current/voltage levels 410, 420) of, e.g., a ramping up period of a phase (e.g., the ramping up period 211 of FIG. 2A) or a ramping down period of a phase (e.g., the ramping down period 217 of FIG. 2A) may be separated by an amount of time less than or equal to 30 ms (e.g., 25 µs). Accordingly, when determining, e.g., non-arc impedance, arc voltage, electrode extension voltage, and/or CTW voltage of the weld circuit 111, the control circuitry 112 may determine and/or presume that the non-arc impedance of the weld circuit 111 exhibits substantially no deviation between each of the output current/voltage levels 410, 420 and/or one or more other current/voltage levels, e.g., based on a respective time or time period of each current/voltage level differing by an amount of time less than or equal to, e.g., less than or equal to 60 ms, less than or equal to 30 ms, less than or equal to 1 ms, less than or equal to 500 µs, less than or equal to 100 µs, less than or equal to 50 µs, or even less than or equal to 25 µs.

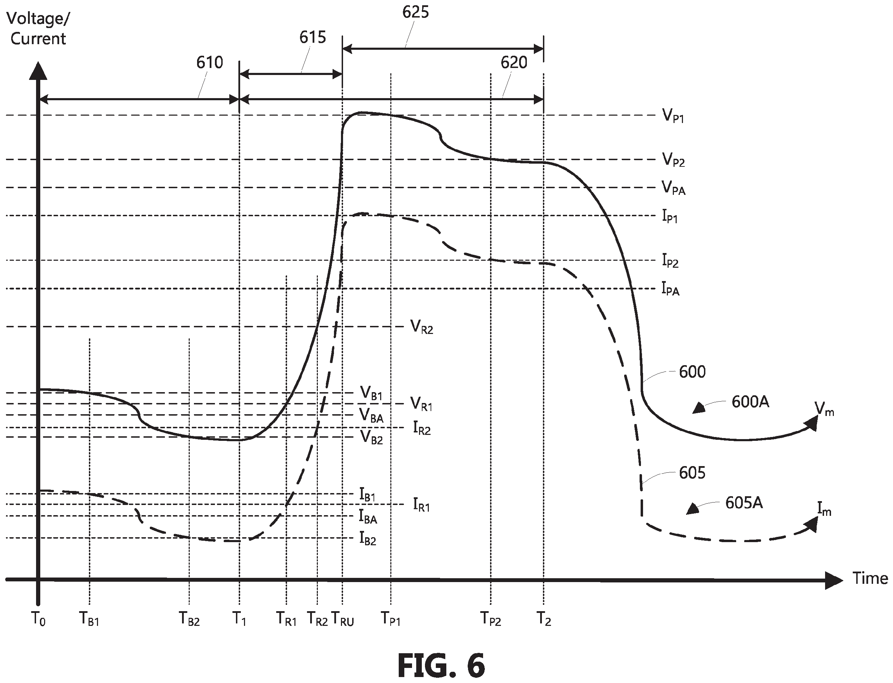

FIG. 6 depicts an example of a waveform 600A of a voltage 600 (e.g., measured by the voltage sensor 162) and an example of a waveform 605A of a measured current 605 during an arc length-controlled period of a welding operation, including several combinations of pairs of output voltage and output current of the arc length-controlled period of the welding operation.

The control circuitry 112 may determine two or more pairs of output voltage and output current, e.g., during a background phase 610 of the waveforms 600A, 605A between an initial time (T₀) and a first time (T₁). In the example of FIG. 6, the control circuitry 112 determines a first background output voltage (V_{B1}) and a first background output current (I_{B1}) at a first background time (T_{S1}) in addition to a second background output voltage (V_{B2}) and a second background output current (I_{B2}) at a second background time (T_{B2}).

The control circuitry 112 may determine two or more pairs of output voltage and output current, e.g., during a peak phase 620 of the waveforms 600A, 605A between the first time (T₁) and a second time (T₂). In the example of FIG. 6, the control circuitry 112 determines a first peak output voltage (V_{P1}) and a first peak output current (I_{P1}) at a first peak time (T_{P1}) in addition to a second peak output voltage (V_{P2}) and a second peak output current (I_{P2}) at a second peak time (T_{P2}).

The control circuitry 112 may determine two or more pairs of measured average output voltage and measured average output current, e.g., during two or more respective phases of one or more pulse cycles of the waveforms 600A, 605A. In the example of FIG. 6, the control circuitry 112 determines an average background output voltage (V_{BA}) and an average background output current (I_{BA}) during the background phase 610 in addition to an average peak output voltage (V_{PA}) and an average peak output current (I_{PA}) during the peak phase 620. The control circuitry 112 determines any, some, or all of the average welding parameters based on two or more measured or determined welding parameters and by using, e.g., an averaging function, a weighted averaging function, and/or one or more other functions. The average background output voltage (V_{BA}) and the average background output current (I_{BA}) are calculated (), e.g., based on two or more output voltages and two or more output currents, respectively, measured or determined during the background phase 610. The average peak output voltage (V_{PA}) and the average peak output current (I_{PA}) are calculated, e.g., based on two or more output voltages and two or more output currents, respectively, measured or determined during the peak phase 620.

Welding parameters measured during periods where such welding parameters are rapidly changing may also be used in calculation of arc voltage, electrode extension voltage, and/or CTW voltage. Accordingly, in the example of FIG. 6, the control circuitry 112 determines a first ramping output voltage (V_{R1}) and a first ramping output current (I_{R1}) at a first ramping time (T_{R1}) in addition to a second ramping output voltage (V_{R2}) and a second ramping output current (I_{R2}) at a second ramping time (T_{R2}) during ramping period 615 of the peak phase 620 of the waveforms 600A, 605A between the first time (T₁) and a ramping up time (T_{RU}). In some examples, arc voltage, electrode extension voltage, and/or CTW voltage is determined based on one or more welding parameters measured during ramping up periods (e.g., the ramping period 615), ramping down periods, and/or other periods of rapid change in one or more welding parameters.

However, during such periods of rapid change, determination of arc voltage, electrode extension voltage, and/or CTW voltage may be associated with a higher level of uncertainty and/or exhibit a higher level of inaccuracy due to effects on measurement caused by and/or associated with the rapid changing of one or more welding parameters. For example, determination of arc voltage, electrode extension voltage, and/or CTW voltage based on one or more output voltages and/or one or more output currents associated with one or more non-ramping portions of a welding operation may result in reduced accuracy and/or increased uncertain in the determined arc voltage, electrode extension voltage, and/or CTW voltage.

For example, inductance induced during the ramping up period 615 by the ramping up of the voltage 600 and the current 605 may cause an arc voltage, electrode extension voltage, and/or CTW voltage derived from, e.g., the ramping output welding parameters (V_{R1}, V_{R2}, I_{R1}, I_{R2}) to be less accurate or be associated with a higher level of uncertainty than arc voltages, electrode extension voltages, and/or CTW voltages determined based on measured welding parameters of other portions of the peak phase 620, during the background phase 610, and/or during one or more other portions (e.g., non-ramping portions) of either or both of the waveforms 600A, 600B. Accordingly, in some examples, the control circuitry 112 determines arc voltage, electrode extension voltage, and/or CTW voltage based on welding parameters measured during non-ramping portions of either or both of the waveforms 600A, 605A (e.g., any, some, or all of the output voltages (V_{B1}, V_{B2}, V_{BA}, V_{P1}, V_{P2}), any, some, or all of the output currents (I_{B1}, I_{B2}, I_{BA}, I_{P1}, I_{P2}), etc.) and/or by calculating average welding parameters (e.g., the average peak output voltage (V_{PA}), the average peak output current (I_{PA}), etc.) based on measured welding parameters measured or determined during non-ramping portions of a phase or waveform (e.g., a non-ramping portion 625 of the peak phase 620).

Referring again to FIG. 4, and with reference to FIG. 6, The first output current (I₁) may comprise the first background output current (I_{B1}), the first peak output current (I_{P1}), the first ramping output current (I_{R1}), the average background current (I_{BA}), and/or one or more other output currents. The first output voltage (V₁) may comprise the first background output voltage (V_{B}), the first peak output voltage (V_{P1}), the first ramping output voltage (V_{R1}), the average background voltage (V_{BA}), and/or one or more other output voltages. The second output current (I₂) may comprise the second background output current (I_{B2}), the second peak output current (I_{P2}), the second ramping output current (I_{R2}), the average peak current (I_{PA}), and/or one or more other output currents. The second output voltage (V₂) may comprise the second background output voltage (V_{B2}), the second peak output voltage (V_{P2}), the second ramping output voltage (V_{R2}), the average peak voltage (V_{PA}), and/or one or more other output voltages.

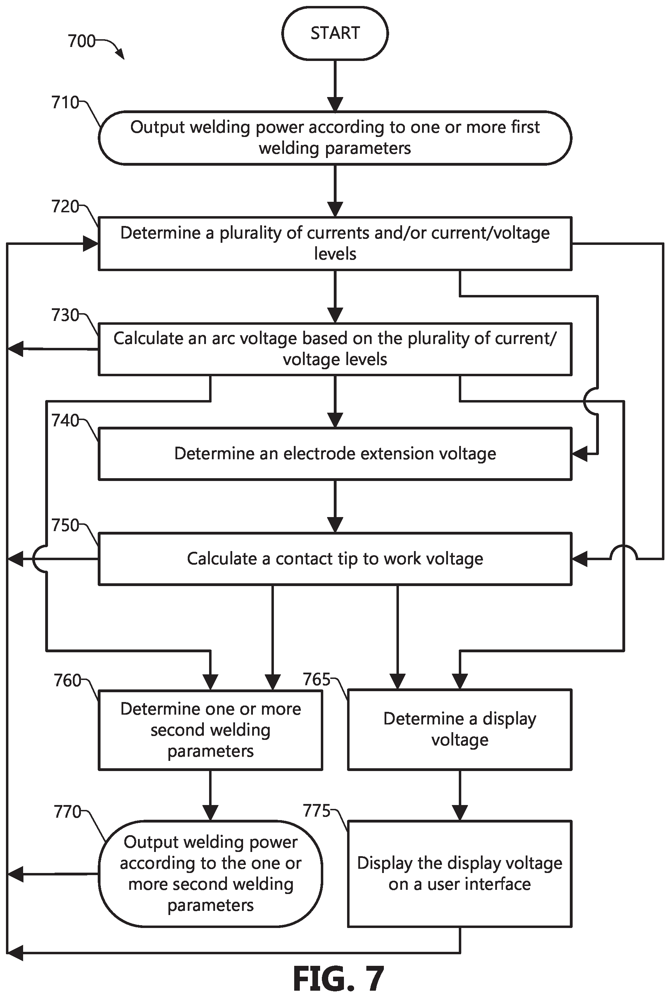

FIG. 7 is a flowchart illustrating an example method 700 of calculating arc voltage, electrode extension voltage, and/or CTW voltage. The method 700 may be implemented by control circuitry (e.g., the control circuitry 112) by executing machine-readable instructions, e.g., stored on a non-transitory machine-readable storage device (e.g., the memory device 124). In describing the method 700, reference will be made to the examples of FIGS. 1-6. However, the method 700 may be used with other examples, such as alternative examples described elsewhere herein.

Referring to FIG. 7, and with reference to FIGS. 1-6, at a block 710, the control circuitry 112 controls the power conversion circuitry 110 to output welding power according to one or more first welding parameters of a welding operation. In some examples, the control circuitry 112 controls the power conversion circuitry 110 to output the welding power in an arc length-controlled mode during an arc length controlled-period of the welding operation. The one or more first welding parameters may comprise a target voltage (e.g., the peak voltage V_{P} of FIGS. 2A and 2B), a target current, a pulse width (e.g., either or both of the pulse widths (PW_{1A}, PW_{1B}) of FIGS. 2A and 2B), a pulse frequency, a waveform portion duration, a waveform portion frequency, a wire feed speed, etc. The control circuitry 112 may control the power conversion circuitry 110 to operate according to the arc length-controlled mode based on one or more target short circuit parameters (e.g., either or both of the target short circuit durations (D_{TA}, D_{TB}) of FIGS. 2A and 2B) and one or more measured short circuit parameters (e.g., any, some, or all of the short circuit durations (D1, D2, D3, D4) of FIGS. 2A and 2B).

At a block 720, the control circuitry 112 determines a plurality of current/voltage levels (e.g., output current/voltage levels) and/or one or more average output currents (e.g., average output currents). In some examples, the control circuitry 112 determines the plurality of current/voltage levels and/or one or more average output currents during one or more arc length-controlled periods of the welding operation (e.g., one or more portions of either or both of the waveforms 200A, 250A of FIGS. 2A and 2B). In some examples, the control circuitry 112 determines the plurality of current/voltage levels and/or one or more average output currents during one or more non-ramping periods of the welding operation (e.g., the background phase 610 and/or the non-ramping period 625 of FIG. 6). The control circuitry 112 may determine a first current/voltage level (e.g., either of the output current/voltage levels 410, 420 of FIG. 4) the plurality of current/voltage levels by monitoring a voltage sensor signal generated by the voltage sensor 162 and/or a current sensor signal generated by the current sensor 164 during a first portion of the arc length-controlled period to determine a first voltage (e.g., either of the voltages (V₁, V₂) of FIG. 4 and/or any of the voltages of FIG. 6) and/or a first voltage (e.g., either of the currents (I₁, I₂) of FIG. 4 and/or any of the currents of FIG. 6). In some examples, after the block 720, the method 700 proceeds to any, some, or all of the block 730 (e.g., to calculate arc voltage), the block 740 (e.g., to calculate electrode extension voltage without calculating arc voltage), and/or the block 750 (e.g., to calculate CTW voltage without calculating electrode extension voltage and/or arc voltage).

At a block 730, the control circuitry 112 determines an arc voltage based on the plurality of current/voltage levels of the block 720 (e.g., a plurality of output voltages and a plurality of output currents). In some examples, the control circuitry 112 uses the expanded arc length-controlled arc voltage relationship equation (5) to calculate the arc voltage. In some examples, after the block 730, the method 700 returns to the block 720, e.g., to conduct another determination of arc voltage (e.g., according to a sampling rate or user request). In some examples, after the block 730, the method 700 ends. In some examples, after the block 730, the method 700 proceeds to any, some, or all of blocks 740, 760, 765 (described in further detail below), e.g., to calculate electrode extension voltage and/or CTW voltage, to modify one or more welding parameters based on the arc voltage, and/or to provide the arc voltage to a user.

At a block 740, the control circuitry 112 determines an electrode extension voltage of the weld circuit 111. In some examples, the control circuitry 112 determines the electrode extension voltage based on an electrode extension length of the electrode extension 142A. In some such examples, the control circuitry 112 determines the electrode extension length and/or the electrode extension voltage based on any, some, or all of a CTWD of the weld circuit 111, a wire feed speed of the wire feeder 104, one or more average currents (e.g., any, some, or all of the average currents 512, 514, 516, 522, 524, 526, 532, 534, 536 of FIG. 5A and/or either or both of the average currents (I_{BA}, I_{PA}) of FIG. 6), one or more relationships (e.g., any, some, or all of the relationships 510, 520, 530), one or more electrode characteristics of the electrode 142, and/or the CTWD/electrode extension voltage relationship equation (6). In some examples, the control circuitry 112 determines the electrode extension voltage based on a wire feed speed of the wire feeder 104, the one or more average currents of the block 720 (e.g., either or both of the average currents (I_{BA}, I_{PA}) of FIG. 6), one or more relationships (e.g., any, some, or all of the relationships 560, 570, 580), and/or one or more electrode characteristics of the electrode 142.

In some examples, the method 700 does not include the block 740. In some examples, after the block 740, the method 700 ends. In some examples, after the block 740, the method 700 proceeds to any, some, or all of blocks 750, 760, 765 (described in further detail below), e.g., to calculate CTW voltage, to modify one or more welding parameters based on the electrode extension voltage, and/or to provide the electrode extension voltage to a user. In some examples, the block 740 directly follows the block 720.

At a block 750, the control circuitry 112 determines a CTW voltage of the weld circuit 111. In some examples, the control circuitry 112 determines the CTW voltage based on the electrode extension voltage of the block 740. In some such examples, the control circuitry 112 determines the CTW voltage based on the expanded arc length-controlled arc voltage relationship equation (5) and/or the CTWD/electrode extension voltage relationship equation (6). In some examples, the control circuitry 112 determines the CTW voltage based on a wire feed speed of the wire feeder 104, the one or more average currents of the block 720 (e.g., either or both of the average currents (I_{BA}, I_{PA}) of FIG. 6), one or more relationships (e.g., any, some, or all of the relationships 560, 570, 580), and/or one or more electrode characteristics of the electrode 142.

In some examples, the method 700 does not include the block 750. In some examples, after the block 750, the method 700 returns to the block 720, e.g., to conduct another determination of arc voltage, electrode extension voltage, and/or CTW voltage (e.g., according to a sampling rate or user request). In some examples, after the block 750, the method 700 ends. In some examples, after the block 750, the method 700 proceeds to either or both of blocks 760 and/or 765 (described in further detail below), e.g., to modify one or more welding parameters based on the CTW voltage and/or to provide the CTW voltage to a user. In some examples, the block 750 directly follows the block 720 or the 730.

At a block 760, the control circuitry 112 determines one or more second welding parameters based on any, some, or all the arc voltage of the block 730, the electrode extension voltage of the block 740, and/or the CTW voltage of the block 750. The one or more second welding parameters may comprise a target voltage (e.g., the peak voltage V_{P} of FIGS. 2A and 2B), a target current, a pulse width (e.g., either or both of the pulse widths (PW_{2A}, PW_{2B}) of FIGS. 2A and 2B), a pulse frequency, a waveform portion duration, a waveform portion frequency, a wire feed speed, etc.

At a block 770, the control circuitry 112 controls the power conversion circuitry 110 to output welding power according to the one or more second welding parameters of the block 760. In some examples, after the block 770, the method 700 returns to the block 720. In some examples, after the block 770, the method 700 ends.

At a block 765, the control circuitry 112 determines a display voltage based on (e.g., by selecting and/or modifying) any, some, or all the arc voltage of the block 730, the electrode extension voltage of the block 740, and/or the CTW voltage of the block 750.

At a block 775, the control circuitry 112 controls the display 116 to display the display voltage of the block 765. In some examples, after the block 775, the method 700 returns to the block 720. In some examples, after the block 775, the method 700 ends.

As used herein, the term "welding operation" refers to a process of welding one or more materials, components, etc. using one or more welding modes.

As used herein, the terms "welding system" and "welding-type system" refer to systems capable of generating and/or conditioning welding power and/or of conducting a welding operation (e.g., by generating, conditioning, and/or receiving welding power). A welding system or welding-type system may operate and/or be capable of operating in only one welding mode and/or in any plurality of welding modes.

As used herein, the terms "torch," "welding torch," "welding tool," and "welding-type tool" can include a hand-held or robotic welding torch, gun, or other device used to create the welding arc.

As used herein, the term "electrode" includes any consumable or non-consumable material which may be controllably provided to a welding torch by welding equipment and which may conduct welding power (e.g., welding wire).

The term "arc length," as used herein, refers to the distance over which a welding-type arc extends between an end or tip of an electrode (e.g., welding wire) of a welding torch and a workpiece (e.g., a piece, component, etc. being welded).

The term "electrode extension," as used herein, refers to a portion of an electrode (e.g., welding wire) extending beyond (e.g., outside of) a contact tip of a welding torch or other welding device.

As used herein, the terms "welding power" and "welding-type power" refer to power suitable for welding, plasma cutting, plasma welding, induction heating, air carbon arc cutting ("CAC-A") and/or hot wire welding/preheating (including laser welding and laser cladding). As used herein, the term "welding-type power supply" refers to any device capable of, when power is applied thereto, supplying welding, plasma cutting, plasma welding, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "welding mode" refers to the type and/or modality of process and/or output used by a welding system, such as gas-metal arc welding ("GMAW") (also referred to as metal inert gas welding ("MIG")), pulsed gas-metal arc welding ("GMAW-P") (also referred to as "pulsed MIG"), current-controlled welding, voltage-controlled welding, enthalpy-controlled welding, power-controlled welding, resistance-controlled welding, pulse welding, tungsten inert gas ("TIG") (also referred to as gas tungsten arc welding ("GTAW")), flux cored arc welding ("FCAW"), shielded metal arc welding ("SMAW") (also referred to as "stick welding"), plasma cutting, plasma welding, spray welding, short circuit transfer welding, pulsed spray welding, and/or one or more other welding modes. As used herein, the term "transfer mode" refers to the mechanism by which an electrode is transferred to a workpiece (e.g., a weld pool on the workpiece), and a welding mode may include one or more transfer modes. A transfer mode may include, e.g., short circuit welding, pulse welding, spray welding, pulsed spray welding, Regulated Metal Deposition (i.e., RMD ^{®}), and/or one or more other transfer modes.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general-purpose microprocessor or microcontroller, a digital signal processing ("DSP") processor, an application-specific integrated circuit ("ASIC"), a graphic processing unit ("GPU"), a reduced instruction set computer ("RISC") processor with an advanced RISC machine ("ARM") core, etc. The processor may be coupled to, and/or integrated with a memory storage device.

As utilized herein the terms "circuits," "circuitry," "controller," and "control circuitry" refer to physical electronic components (i.e., hardware) and any software and/or firmware ("code") which may configure the hardware, be executed by the hardware, and/or otherwise be associated with the hardware. As used herein, for example, a "circuit" may comprise any analog and/or digital components, power and/or control elements (such as a microprocessor, digital signal processor ("DSP"), software, and the like), discrete and/or integrated components, associated software, hardware, and/or firmware, and/or portions and/or combinations thereof. As used herein, for example, a particular processor and memory storage device may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

As used herein, the term "communication circuitry" refers to physical electronic components (i.e., hardware) and, in some examples, any software and/or firmware (i.e., code) which may configure the hardware, be executed by the hardware, and/or otherwise enable the hardware to communicate with one or more other devices (e.g., with communication circuitry of such one or more other devices). Communication circuitry may include hardware capable of wired and/or wireless communication with one or more other devices. Hardware capable of wired communication may include, e.g., one or more cables or other optical communication mechanisms, one or more computer buses, and/or one or more additional wired mechanisms for communicating with one or more communications networks and/or one or more devices. Hardware capable of wireless communications may include, e.g., one or more transceivers, one or more antennas, one or more modems, one or more local area network ("LAN") ports, one or more wireless fidelity ("Wi-Fi") cards, one or more WiMax cards, mobile communications hardware, near-field communication hardware, satellite communication hardware, hardware configured to communicate in accordance with one or more wireless communication protocols (e.g., IrDA, Bluetooth, Wireless USB, Z-Wave, ZigBee, radio frequency identification ("RFID"), one or more other near field communications ("NFC") protocols, and/or one or more other protocols for close-proximity and/or wireless communication), and/or other hardware for wirelessly communicating with one or more communications networks and/or one or more devices. Communication circuitry may include one or more network interfaces, one or more input-output ("I/O") interfaces, and/or one or more other interfaces for communicating data (e.g., directly, via one or more communications paths, etc.) to and/or from one or more communications networks. An example network interface may include hardware, firmware, and/or software to communicatively couple communication circuitry to one or more communications networks. A network interface may include and/or be coupled to one or more communication paths. A communication path includes hardware which provides signal interconnectivity between one or more components (e.g., control circuitry and a transceiver). A network interface may include any hardware for transmitting and/or receiving communications (e.g., IEEE 802.X- and/or IEEE 1905.X-compliant wireless and/or wired communications hardware). An example I/O interface includes hardware, firmware, and/or software to connect one or more I/O devices to control circuitry (communicatively coupled to, e.g., communication circuitry comprising the I/O interface) for providing input to the control circuitry and/or providing output from the control circuitry. For example, the I/O interface may include a graphics processing unit for interfacing with a display device, a universal serial bus port for interfacing with one or more USB-compliant devices, a FireWire, a field bus, and/or any other type of interface. Example I/O device(s) may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device. Control circuitry communicatively coupled to an I/O interface may access a non-transitory machine-readable medium via the I/O interface and/or one or more I/O device(s). Examples of a machine-readable medium include optical discs (e.g., compact discs ("CDs"), digital versatile/video discs ("DVDs"), Blu-ray discs, etc.), magnetic media (e.g., floppy disks), portable storage media (e.g., portable flash drives, secure digital ("SD") cards, etc.), and/or any other type of removable and/or installed machine-readable media.

A "communications network" may include one or more of the Internet, one or more personal area networks ("PAN(s)"), one or more LANs, one or more wide area networks ("WAN(s)"), one or more cellular networks, one or more satellite networks, one or more global positioning systems, one or more other such networks, and/or any combination thereof. A LAN may include, e.g., one or more wired technologies (e.g., Ethernet, USB, etc.) and/or one or more wireless technologies (e.g., Wi-Fi). A PAN may include one or more wired technologies (e.g., USB, FireWire, and/or one or more other computer buses) and/or one or more wireless technologies (e.g., Bluetooth, Wireless USB, IrDA, Z-Wave, ZigBee, RFID, one or more other NFC protocols, and/or one or more other protocols for close-proximity and/or wireless communication). A cellular network may include, e.g., technologies such as LTE, WiMAX, UMTS, CDMA, GSM, 3G, 4G, 5G, 6G, and/or one or more other technologies.

As used, herein, the term "memory," "memory storage device," "storage device," and/or "memory device" means computer hardware or circuitry to store information for use by a processor and/or other digital device. The memory, memory storage device, and/or memory device can be any suitable type of computer memory or any other type of electronic storage medium, such as, for example, read-only memory ("ROM"), random access memory ("RAM"), cache memory, compact disc read-only memory ("CDROM"), electro-optical memory, magneto-optical memory, programmable read-only memory ("PROM"), erasable programmable read-only memory ("EPROM"), electrically-erasable programmable read-only memory ("EEPROM"), a computer-readable medium, or the like. Memory can include, for example, a non-transitory memory, a non-transitory processor readable medium, a non-transitory computer readable medium, non-volatile memory, dynamic RAM ("DRAM"), volatile memory, ferroelectric RAM ("FRAM"), first-in-first-out ("FIFO") memory, last-in-first-out ("LIFO") memory, stack memory, non-volatile RAM ("NVRAM"), static RAM ("SRAM"), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module ("SIM") card, a hard drive ("HDD"), a solid state drive ("SSD"), etc. The memory, memory storage device, and/or memory device can be configured to store code, instructions, applications, software, firmware, and/or data, and may be external, internal, or both with respect to a processor.

Features described herein make reference to the accompanying drawings in which exemplary embodiments of the disclosure are shown. However, it should be understood that the systems of this disclosure can be embodied in many different forms and should not be construed as limited to the embodiments set forth herein.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

Unless otherwise expressly stated, it is in no way intended than any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As used herein, the word "exemplary" means serving as a non-limiting example, instance, or illustration. The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation. As utilized herein, the terms "e.g." and "for example" set off lists of one or more non-limiting examples, instances, or illustrations.

While the present method, apparatus, and/or system has been described with reference to certain implementations, it will be understood by those skilled in the art that various changes, modifications, and variations may be made to the present disclosure and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Various embodiments of the invention are recited in the following Clauses.

Clause 1.A welding system comprising:
power conversion circuitry configured to convert input power to welding power and output the welding power to a weld circuit during a welding operation;
a current sensor configured to measure an output current of the power conversion circuitry and generate a current sensor signal comprising a measured current;
a voltage sensor configured to measure an output voltage of the power conversion circuitry and generate a voltage sensor signal comprising a measured voltage; and
control circuitry configured to:
   control the power conversion circuitry to output the welding power according to one or more first welding parameters; and
   determine an arc voltage of a welding arc of the weld circuit by:
      monitoring the current sensor signal and the voltage sensor signal during a first portion of the welding operation to determine a first output current and a first output voltage of the weld circuit;
      monitoring the current sensor signal and the voltage sensor signal during a second portion of the welding operation to determine a second output current and a second output voltage of the weld circuit, wherein at least one of the first portion or the second portion are a non-ramping portion; and determining the arc voltage based on the first output voltage, the second output voltage, the first output current, and the second output current.

Clause 2.The welding system of Clause 1, wherein each of the current sensor and the voltage sensor are electrically coupled to at least one output terminal of the one or more output terminals of the power conversion circuitry to measure the output current of the power conversion circuitry.

Clause 3.The welding system of Clause 1, wherein the control circuitry is further configured to:
determine an average output current of the weld circuit based on the sensor signal of the welding operation; and
determine a contact tip-to-work voltage of the weld circuit based on the average output current, a wire feed speed of the electrode, and one or more predetermined average current/wire feed speed relationships.

Clause 4.The welding system of Clause 3, wherein the control circuitry is further configured to:
determine an electrode extension voltage of the weld circuit based on the average output current, the wire feed speed of the electrode, and the one or more predetermined average current/wire feed speed relationships; and
calculate the contact tip-to-work voltage of the weld circuit based on the arc voltage and the electrode extension voltage.

Clause 5.The welding system of Clause 4, wherein the determining of the electrode extension voltage comprises:
determining an electrode extension length of the electrode extension based on the average output current, the wire feed speed, the one or more predetermined average current/wire feed speed relationships, and at least one of an arc length of the weld circuit or a target arc length of the arc length-controlled mode; and
calculating the electrode extension voltage based on the electrode extension length and the average current.

Clause 6.The welding system of Clause 5, wherein the determining of the calculating of the electrode extension voltage is further based on one or more electrode extension characteristics of the electrode.

Clause 7.The welding system of Clause 4, wherein:
the control circuitry is configured to control the power conversion circuitry to output the welding power in an arc length-controlled mode during one or more arc length-controlled periods of the welding operation; and
each of the first output current, the first output voltage, the second output current, and the second output voltage are measured during the one or more arc length-controlled periods of the welding operation.

Clause 8.The welding system of Clause 4, wherein each of the first output current, the first output voltage, the second output current, and the second output voltage are measured during one or more non-ramping periods of the welding operation.

Clause 9.The welding system of Clause 3, wherein the plurality of predetermined average current/wire feed speed relationships comprise one or more predetermined lookup tables associating each predetermined voltage of a plurality of predetermined voltages with a respective predetermined wire feed speed of a plurality of predetermined wire feed speeds and a respective predetermined average current of a plurality of predetermined average currents.

Clause 10.The welding system of Clause 9, wherein the one or more predetermined lookup tables further associate each predetermined voltage of the plurality of predetermined voltages with one or more respective electrode characteristics.

Clause 11.The welding system of Clause 3, wherein the determining of the contact tip-to-work voltage is further based on one or more electrode characteristics of the electrode, the one or more electrode characteristics comprising at least one of:
a wire size of the electrode;
a wire area of the electrode;
a material of the electrode;
a resistivity of the electrode;
a conductivity of the electrode;
a specific heat of the electrode;
a melting temperature of the electrode;
a wire type of the electrode; or
a temperature of the electrode.

Clause 12.The welding system of Clause 3, wherein:
the average current of the weld circuit is a moving average current; and
the control circuitry is further configured to:
   monitor the current sensor signal to determine a plurality of measured currents; and
   calculate the moving average current based on the plurality of measured currents.

Clause 13.The welding system of Clause 1, wherein the first output current is measured during a first phase of the welding operation and the second output current is measured during a second phase of the welding operation.

Clause 14.The welding system of Clause 1, wherein the first output current and the second output current are measured during one or more non-ramping periods of the welding operation.

Clause 15.The welding system of Clause 1, wherein:
the control circuitry is configured to control the power conversion circuitry to output the welding power in an arc length-controlled mode during one or more arc length-controlled periods of the welding operation; and
the first output current and the second output current are measured during one or more arc length-controlled periods of the welding operation.

Clause 16.The welding system of Clause 15, wherein the outputting of the welding power in the arc length-controlled mode comprises:
controlling the power conversion circuitry to output the welding power according to one or more initial welding parameters of the one or more first welding parameters, the one or more initial welding parameters comprising an initial waveform;
monitoring the voltage sensor signal during at least a portion of the initial waveform to determine one or more short circuit parameters of one or more short circuit events;
determining one or more subsequent welding parameters of the one or more first welding parameters based on the one or more initial welding parameters and the one or more short circuit parameters; and
controlling the power conversion circuitry to output the welding power according to the one or more subsequent welding parameters.

Clause 17.The welding system of Clause 16, wherein the one or more short circuit parameters comprise a short circuit duration.

Clause 18.The welding system of Clause 1, wherein the control circuitry is further configured to:
determine one or more second welding parameters based on the arc voltage; and
control the power conversion circuitry to output the welding power according to the one or more second welding parameters.

Clause 19.The welding system of Clause 1, wherein the control circuitry is further configured to:
determine a display voltage based on the arc voltage;
display the display voltage on a user interface.

Clause 20.The welding system of Clause 1, wherein the power conversion circuitry is configured to output the welding power according to at least one of:
a gas-metal arc welding (GMAW) or metal inert gas welding (MIG) operation;
a pulsed gas-metal arc welding (GMAW-P) or pulsed metal inert gas (MIG) welding operation;
a current-controlled welding operation;
a voltage-controlled welding operation;
a power-controlled welding operation;
a resistance-controlled welding operation;
an enthalpy-controlled welding operation;
a tungsten inert gas welding (TIG) or gas tungsten arc welding (GTAW) operation;
a flux cored arc welding (FCAW) operation;
a shielded metal arc welding (SMAW) or stick welding operation;
a plasma cutting operation;
a plasma welding operation;
a spray welding operation;
a short circuit transfer welding operation;
a pulse welding operation; or
a pulsed spray welding operation.

Clause 21.A welding system comprising:
power conversion circuitry configured to convert input power to welding power and output the welding power to a weld circuit during a welding operation;
a voltage sensor configured to measure an output voltage of the power conversion circuitry and generate a voltage sensor signal comprising a measured voltage;
a current sensor configured to measure an output current of the power conversion circuitry and generate a current sensor signal comprising a measured current; and
control circuitry configured to:
   control the power conversion circuitry to output the welding power according to one or more first welding parameters and an arc length-controlled mode during an arc length-controlled period of the welding operation; and
   determine an arc voltage of a welding arc of the weld circuit by:
      monitoring the voltage sensor signal and the current sensor signal during a first portion of the arc length-controlled period to determine a first output voltage and a first output current of the weld circuit;
      monitoring the voltage sensor signal and the current sensor signal during a second portion of the arc length-controlled period to determine a second output voltage and a second output current of the weld circuit; and
      calculating the arc voltage based on the first output voltage, the second output voltage, the first output current, and the second output current.

Clause 22.The welding system of Clause 21, wherein:
the voltage sensor is electrically coupled to at least one output terminal of one or more output terminals of the power conversion circuitry to measure the output voltage of the power conversion circuitry; and
the current sensor is electrically coupled to at least one output terminal of the one or more output terminals of the power conversion circuitry to measure the output current of the power conversion circuitry.

Clause 23.The welding system of Clause 21, wherein the calculating of the arc voltage is based on:
a first difference between the first output voltage and the second output voltage; and
a second difference between the first output current and the second output current.

Clause 24.The welding system of Clause 21, wherein the control circuitry is further configured to:
determine an average output current of the weld circuit based on the sensor signal during the arc length controlled-period of the welding operation;
determine an electrode extension voltage of the weld circuit based on the average output current, a wire feed speed of the electrode, and one or more predetermined average current/wire feed speed relationships; and
calculate a contact tip-to-work voltage of the weld circuit based on the arc voltage and the electrode extension voltage.

Clause 25.The welding system of Clause 24, wherein the plurality of predetermined average current/wire feed speed relationships comprise one or more predetermined lookup tables associating each predetermined electrode extension voltage of a plurality of predetermined electrode extension voltages with a respective predetermined wire feed speed of a plurality of predetermined wire feed speeds and a respective predetermined average current of a plurality of predetermined average currents.

Clause 26.The welding system of Clause 25, the one or more predetermined lookup tables further associate each predetermined electrode extension voltage of the plurality of electrode extension voltages with one or more respective electrode characteristics.

Clause 27.The welding system of Clause 24, wherein the determining of the electrode extension voltage comprises:
determining an electrode extension length of the electrode extension based on the average output current, the wire feed speed, the one or more predetermined average current/wire feed speed relationships, and at least one of an arc length of the weld circuit or a target arc length of the arc length-controlled mode; and
calculating the electrode extension voltage based on the electrode extension length and the average current.

Clause 28.The welding system of Clause 27, wherein the calculating of the electrode extension voltage is further based on one or more electrode characteristics of the electrode.

Clause 29.The welding system of Clause 24, wherein the determining of the electrode extension voltage is further based on one or more electrode characteristics of the electrode, the one or more electrode characteristics comprising at least one of:
a wire size of the electrode;
a wire area of the electrode;
a material of the electrode;
a resistivity of the electrode;
a conductivity of the electrode;
a specific heat of the electrode;
a melting temperature of the electrode;
a wire type of the electrode; or
a temperature of the electrode.

Clause 30.The welding system of Clause 24, wherein:
the average current of the weld circuit is a moving average current; and
the control circuitry is further configured to:
   monitor the current sensor signal to determine a plurality of measured currents; and
   calculate the moving average current based on the plurality of measured currents.

Clause 31.The welding system of Clause 21, wherein the first portion of the arc length-controlled period is during a first phase of the welding operation and the second portion of the arc-length controlled period is in a second phase of the welding operation distinct from the first phase.

Clause 32.The welding system of Clause 21, wherein the outputting of the welding power in the arc length-controlled mode comprises:
controlling the power conversion circuitry to output the welding power according to one or more initial welding parameters of the one or more first welding parameters, the one or more initial welding parameters comprising an initial waveform;
monitoring the voltage sensor signal during at least a portion of the initial waveform to determine one or more short circuit parameters of one or more short circuit events;
determining one or more subsequent welding parameters of the one or more first welding parameters based on the one or more initial welding parameters and the one or more short circuit parameters; and
controlling the power conversion circuitry to output the welding power according to the one or more subsequent welding parameters.

Clause 33. The welding system of Clause 32, wherein:
the one or more initial welding parameters comprise at least one of an initial ramping up rate, an initial wire feed speed, an initial first ramp down rate, an initial target voltage, an initial target current, an initial target power, an initial target resistance, an initial target enthalpy, an initial phase duration of an initial phase of one or more initial pulse cycles of the initial waveform, an initial duration of an initial portion of the initial waveform, or an initial waveform frequency; and
the one or more subsequent welding parameters comprise at least one of a subsequent ramping up rate, a subsequent ramping down rate, a subsequent wire feed speed, a subsequent target voltage, a subsequent target current, a subsequent target power, a subsequent target resistance, a subsequent target enthalpy, a subsequent duration of a subsequent phase duration of one or more subsequent pulse cycles of a subsequent waveform, a subsequent duration of a subsequent portion of the subsequent waveform, or a subsequent waveform frequency.

Clause 34.The welding system of Clause 21, wherein:
the first portion of the arc length-controlled period comprises a first phase portion of a phase of one or more pulse cycles of the one or more first welding parameters; and
the second portion of the arc length-controlled period comprises a second phase portion of the phase of the one or more pulse cycles.

Clause 35.The welding system of Clause 21, wherein one or more non-ramping periods of the welding operation comprise the first portion of the arc length-controlled period and the second portion of the arc length-controlled period.

Clause 36.The welding system of Clause 21, wherein:
the first output voltage is a first average voltage;
the second output voltage is a second average voltage;
the first output current is a first average current;
the second output current is a second average current; and
the control circuitry is further configured to:
   calculate the first average voltage based on a plurality of first measured voltages of the first portion of the arc length-controlled period;
   calculate the first average current based on a plurality of first measured currents of the first portion of the arc length-controlled period;
   calculate the second average voltage based on a plurality of second measured voltages of the second portion of the arc length-controlled period; and
   calculate the second average current based on a plurality of second measured currents of the second portion of the arc length-controlled period.

Clause 37.The welding system of Clause 36, wherein:
the first portion of the arc length-controlled period comprises at least a portion of a first phase of one or more pulse cycles of the one or more first welding parameters; and
the second portion of the arc length-controlled period comprises at least a portion of a second phase of the one or more pulse cycles.

Clause 38.The welding system of Clause 21, wherein the control circuitry is further configured to:
determine a display voltage based at least on the arc voltage; and
display the display voltage on a user interface.

Clause 39.The welding system of Clause 21, wherein the control circuitry is further configured to:
determine one or more second welding parameters based on the arc voltage; and
control the power conversion circuitry to output the welding power according to the one or more second welding parameters.

Clause 40.The welding system of Clause 21, wherein the power conversion circuitry is configured to output the welding power according to at least one of:
a gas-metal arc welding (GMAW) or metal inert gas welding (MIG) operation;
a pulsed gas-metal arc welding (GMAW-P) or pulsed metal inert gas (MIG) welding operation;
a current-controlled welding operation;
a voltage-controlled welding operation;
a power-controlled welding operation;
a resistance-controlled welding operation;
an enthalpy-controlled welding operation;
a tungsten inert gas welding (TIG) or gas tungsten arc welding (GTAW) operation;
a flux cored arc welding (FCAW) operation;
a shielded metal arc welding (SMAW) or stick welding operation;
a plasma cutting operation;
a plasma welding operation;
a spray welding operation;
a short circuit transfer welding operation;
a pulse welding operation; or
a pulsed spray welding operation.

## Claims

1. A welding system comprising:
power conversion circuitry configured to convert input power to welding power and output the welding power to a weld circuit during a welding operation;
a voltage sensor configured to measure an output voltage of the power conversion circuitry and generate a voltage sensor signal comprising a measured voltage;
a current sensor configured to measure an output current of the power conversion circuitry and generate a current sensor signal comprising a measured current; and
control circuitry configured to:
control the power conversion circuitry to output the welding power according to one or more first welding parameters and an arc length-controlled mode during an arc length-controlled period of the welding operation; and
determine an arc voltage of a welding arc of the weld circuit by:
monitoring the voltage sensor signal and the current sensor signal during a first portion of the arc length-controlled period to determine a first output voltage and a first output current of the weld circuit;
monitoring the voltage sensor signal and the current sensor signal during a second portion of the arc length-controlled period to determine a second output voltage and a second output current of the weld circuit; and
calculating the arc voltage based on the first output voltage, the second output voltage, the first output current, and the second output current.

2. The welding system of claim 1, wherein:
the voltage sensor is electrically coupled to at least one output terminal of one or more output terminals of the power conversion circuitry to measure the output voltage of the power conversion circuitry; and
the current sensor is electrically coupled to at least one output terminal of the one or more output terminals of the power conversion circuitry to measure the output current of the power conversion circuitry.

3. The welding system of claim 1, wherein the calculating of the arc voltage is based on:
a first difference between the first output voltage and the second output voltage; and
a second difference between the first output current and the second output current.

4. The welding system of claim 1, wherein the control circuitry is further configured to:
determine an average output current of the weld circuit based on the sensor signal during the arc length controlled-period of the welding operation;
determine an electrode extension voltage of the weld circuit based on the average output current, a wire feed speed of the electrode, and one or more predetermined average current/wire feed speed relationships; and
calculate a contact tip-to-work voltage of the weld circuit based on the arc voltage and the electrode extension voltage.

5. The welding system of claim 4, wherein the plurality of predetermined average current/wire feed speed relationships comprise one or more predetermined lookup tables associating each predetermined electrode extension voltage of a plurality of predetermined electrode extension voltages with a respective predetermined wire feed speed of a plurality of predetermined wire feed speeds and a respective predetermined average current of a plurality of predetermined average currents,
and optionally the one or more predetermined lookup tables further associate each predetermined electrode extension voltage of the plurality of electrode extension voltages with one or more respective electrode characteristics.

6. The welding system of claim 4, wherein the determining of the electrode extension voltage comprises:
determining an electrode extension length of the electrode extension based on the average output current, the wire feed speed, the one or more predetermined average current/wire feed speed relationships, and at least one of an arc length of the weld circuit or a target arc length of the arc length-controlled mode; and
calculating the electrode extension voltage based on the electrode extension length and the average current,
and optionally wherein the calculating of the electrode extension voltage is further based on one or more electrode characteristics of the electrode.

7. The welding system of claim 4, wherein the determining of the electrode extension voltage is further based on one or more electrode characteristics of the electrode, the one or more electrode characteristics comprising at least one of:
a wire size of the electrode;
a wire area of the electrode;
a material of the electrode;
a resistivity of the electrode;
a conductivity of the electrode;
a specific heat of the electrode;
a melting temperature of the electrode;
a wire type of the electrode; or
a temperature of the electrode.

8. The welding system of claim 4, wherein:
the average current of the weld circuit is a moving average current; and
the control circuitry is further configured to:
monitor the current sensor signal to determine a plurality of measured currents; and
calculate the moving average current based on the plurality of measured currents.

9. The welding system of claim 1, wherein the first portion of the arc length-controlled period is during a first phase of the welding operation and the second portion of the arc-length controlled period is in a second phase of the welding operation distinct from the first phase.

10. The welding system of claim 1, wherein the outputting of the welding power in the arc length-controlled mode comprises:
controlling the power conversion circuitry to output the welding power according to one or more initial welding parameters of the one or more first welding parameters, the one or more initial welding parameters comprising an initial waveform;
monitoring the voltage sensor signal during at least a portion of the initial waveform to determine one or more short circuit parameters of one or more short circuit events;
determining one or more subsequent welding parameters of the one or more first welding parameters based on the one or more initial welding parameters and the one or more short circuit parameters; and
controlling the power conversion circuitry to output the welding power according to the one or more subsequent welding parameters.

11. The welding system of claim 10, wherein:
the one or more initial welding parameters comprise at least one of an initial ramping up rate, an initial wire feed speed, an initial first ramp down rate, an initial target voltage, an initial target current, an initial target power, an initial target resistance, an initial target enthalpy, an initial phase duration of an initial phase of one or more initial pulse cycles of the initial waveform, an initial duration of an initial portion of the initial waveform, or an initial waveform frequency; and
the one or more subsequent welding parameters comprise at least one of a subsequent ramping up rate, a subsequent ramping down rate, a subsequent wire feed speed, a subsequent target voltage, a subsequent target current, a subsequent target power, a subsequent target resistance, a subsequent target enthalpy, a subsequent duration of a subsequent phase duration of one or more subsequent pulse cycles of a subsequent waveform, a subsequent duration of a subsequent portion of the subsequent waveform, or a subsequent waveform frequency.

12. The welding system of claim 1,
wherein:
the first portion of the arc length-controlled period comprises a first phase portion of a phase of one or more pulse cycles of the one or more first welding parameters; and
the second portion of the arc length-controlled period comprises a second phase portion of the phase of the one or more pulse cycles;
and/or wherein:
one or more non-ramping periods of the welding operation comprise the first portion of the arc length-controlled period and the second portion of the arc length-controlled period.

13. The welding system of claim 1, wherein:
the first output voltage is a first average voltage;
the second output voltage is a second average voltage;
the first output current is a first average current;
the second output current is a second average current; and
the control circuitry is further configured to:
calculate the first average voltage based on a plurality of first measured voltages of the first portion of the arc length-controlled period;
calculate the first average current based on a plurality of first measured currents of the first portion of the arc length-controlled period;
calculate the second average voltage based on a plurality of second measured voltages of the second portion of the arc length-controlled period; and
calculate the second average current based on a plurality of second measured currents of the second portion of the arc length-controlled period,
and optionally wherein:
the first portion of the arc length-controlled period comprises at least a portion of a first phase of one or more pulse cycles of the one or more first welding parameters; and
the second portion of the arc length-controlled period comprises at least a portion of a second phase of the one or more pulse cycles.

14. The welding system of claim 1,
wherein the control circuitry is further configured to:
determine a display voltage based at least on the arc voltage; and
display the display voltage on a user interface;
and/or wherein:
the control circuitry is further configured to:
determine one or more second welding parameters based on the arc voltage; and
control the power conversion circuitry to output the welding power according to the one or more second welding parameters.

15. The welding system of claim 1, wherein the power conversion circuitry is configured to output the welding power according to at least one of:
a gas-metal arc welding (GMAW) or metal inert gas welding (MIG) operation;
a pulsed gas-metal arc welding (GMAW-P) or pulsed metal inert gas (MIG) welding operation;
a current-controlled welding operation;
a voltage-controlled welding operation;
a power-controlled welding operation;
a resistance-controlled welding operation;
an enthalpy-controlled welding operation;
a tungsten inert gas welding (TIG) or gas tungsten arc welding (GTAW) operation;
a flux cored arc welding (FCAW) operation;
a shielded metal arc welding (SMAW) or stick welding operation;
a plasma cutting operation;
a plasma welding operation;
a spray welding operation;
a short circuit transfer welding operation;
a pulse welding operation; or
a pulsed spray welding operation.
